(19) **Europäisches Patentamt European Patent Office Office européen des brevets**

(11) **EP 4 745 920 A1**

(12) **EUROPEAN PATENT APPLICATION**
published in accordance with Art. 153(4) EPC

(43) Date of publication:
**20.05.2026 Bulletin 2026/21**

(21) Application number: **24867331.1**

(22) Date of filing: **10.09.2024**

(51) International Patent Classification (IPC):
***G06V 20/64*** (2022.01)

(52) Cooperative Patent Classification (CPC):
**G01C 21/3826; G01C 5/00;** G06T 2207/10028;
G06T 2207/20072

(86) International application number:
**PCT/CN2024/117933**

(87) International publication number:
**WO 2025/060919 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.09.2023 CN 202311212439**

(71) Applicant: **Tencent Technology (Shenzhen)
Company Limited
Shenzhen, Guangdong 518057 (CN)**

(72) Inventors:
• **GAO, Chao
Shenzhen, Guangdong 518057 (CN)**
• **LIU, Chuang
Shenzhen, Guangdong 518057 (CN)**

(74) Representative: **AWA Sweden AB
Box 5117
200 71 Malmö (SE)**

(54) **ELEVATION-INFORMATION PROCESSING METHOD AND APPARATUS, AND ELECTRONIC DEVICE AND STORAGE MEDIUM**

(57) The present application relates to the technical field of maps, and in particular relates to an elevation-information processing method and apparatus, and an electronic device and a storage medium, which can be applied in fields such as maps, traffic, and autonomous driving. The method comprises: performing sampling on lane data of roads in a target area, so as to obtain a plurality of sampling points; determining the plurality of sampling points and a plurality of elevation values of each of the plurality of sampling points from a plurality of point cloud identification results which are obtained by identifying a plurality of point clouds of the target area, and using the plurality of elevation values of each sampling point as candidate elevation values of the sampling point, so as to form a set of candidate elevation values of the sampling point; performing fitting on the plurality of sampling points to obtain a fitting result, and on the basis of the fitting result, determining one or more target sampling points among the plurality of sampling points; and respectively executing the following operations for a set of candidate elevation values of each of the one or more target sampling points: determining confidence levels of candidate elevation values in the set of candidate elevation values of the target sampling point, and determining a valid elevation value of the target sampling point on the basis of the confidence levels of the candidate elevation values.

FIG. 3

**Description**

RELATED APPLICATION

This application claims priority to Chinese Patent Application No. 202311212439.6, filed with the China National Intellectual Property Administration on September 20, 2023 and entitled "ELEVATION INFORMATION PROCESSING METHOD AND APPARATUS, ELECTRONIC DEVICE, AND STORAGE MEDIUM".

FIELD OF THE TECHNOLOGY

The present disclosure relates to the field of map technologies, and in particular, to an elevation information processing method and apparatus, an electronic device, and a storage medium.

BACKGROUND OF THE DISCLOSURE

In a high-precision map, how to process elevation information of data is a vital part. A trajectory-based road network matching method is used in an automatic elevation processing method. According to the method, matching is first performed between a trajectory and a road using a trajectory snapping algorithm, and then an elevation value is automatically assigned to data such as a road lane based on elevation information in trajectory information.

However, in a current trajectory-based road network matching method, a vehicle trajectory is used as a main reference, which includes a small amount of information. In addition, installation locations of a global positioning system (GPS) on different vehicles are not fixed, and when an elevation difference with a ground is estimated using the GPS, an error is generated, affecting precision of elevation information obtained using the GPS. Therefore, accuracy of current automatic elevation processing with a trajectory-based road network matching algorithm is affected by a plurality of factors such as precision of a road network, positioning precision of the GPS, and a length of the trajectory, and an upper limit of the accuracy is difficult to raise.

SUMMARY

Embodiments of the present disclosure provide an elevation information processing method and apparatus, an electronic device, and a storage medium, to improve accuracy of elevation information processing.

The embodiments of the present disclosure provide an elevation information processing method, including:

sampling lane data of a road in a target region to obtain a plurality of sampling points;

determining, from a plurality of point cloud recognition results each obtained by recognizing a point cloud of the target region, a plurality of elevation values for a respective sampling point of the plurality of sampling points, as candidate elevation values of the respective sampling point, in which the candidate elevation values of the respective sampling point form a candidate elevation value set of the respective sampling point;

fitting the candidate elevation values of the plurality of sampling points to obtain a fitting result, and determining one or more target sampling points in the plurality of sampling points based on the fitting result; and

for the candidate elevation value set of a respective target sampling point in the one or more target sampling points, determining a confidence of each candidate elevation value in the candidate elevation value set of the respective target sampling point, and determining an effective elevation value of the respective target sampling point based on the confidence of each candidate elevation value.

The embodiments of the present disclosure provide an elevation information processing apparatus, including:

a sampling point, configured to sample lane data of a road in a target region to obtain a plurality of sampling points;

a fitting unit, configured to determine, from a plurality of point cloud recognition results each obtained by recognizing a point cloud of the target region, a plurality of elevation values each for a respective sampling point of the plurality of sampling points, as candidate elevation values of the respective sampling point, in which the candidate elevation values of the respective sampling point form a candidate elevation value set of the respective sampling point; and fit the candidate elevation values of the plurality of sampling points to obtain a fitting result, and determine one or more target sampling points in the plurality of sampling points based on the fitting result; and

a fusion unit, configured to, for the candidate elevation value set of a respective target sampling point in the one or more target sampling points, determine a confidence of each candidate elevation value in the candidate elevation value set of the respective target sampling point, and determine an effective elevation value of the respective target sampling point based on the confidence of each candidate elevation value.

The embodiments of the present disclosure provide an electronic device, including a processor and a memory. The memory has a computer program stored therein. The computer program, when executed by the processor, enables the processor to perform any one of the operations of the foregoing elevation information processing method.

The embodiments of the present disclosure provide a computer-readable storage medium, including a computer program that, when run on an electronic device, is configured for enabling the electronic device to perform any one of the operations of the foregoing elevation information processing method.

The embodiments of the present disclosure provide a computer program product. The computer program product includes a computer program. The computer program is stored in a computer-readable storage medium. When a processor of an electronic device reads the computer program from the computer-readable storage medium, the processor executes the computer program, so that the electronic device performs any one of the operations of the foregoing elevation information processing method.

BRIEF DESCRIPTION OF THE DRAWINGS

The accompanying drawings described herein are used to provide a further understanding of the present disclosure, and form a part of the present disclosure. Exemplary embodiments of the present disclosure and descriptions thereof are used to explain the present disclosure, and do not constitute any inappropriate limitation on the present disclosure. In the accompanying drawings:

FIG. 1 is a schematic diagram of an example of an application scenario according to the embodiments of the present disclosure.

FIG. 2 is a schematic diagram of an elevation data processing procedure in a data production stage according to the embodiments of the present disclosure.

FIG. 3 is a flowchart of an elevation information processing method according to the embodiments of the present disclosure.

FIG. 4 is a schematic diagram of loading a lane line recognition result of a target region according to the embodiments of the present disclosure.

FIG. 5 is a schematic diagram of comparison between effects of a random sample consensus (RANSAC) fitting algorithm and a linear fitting algorithm according to the embodiments of the present disclosure.

FIG. 6 is a schematic diagram of a plane fitting related process according to the embodiments of the present disclosure.

FIG. 7 is a schematic diagram of a plane and a standard normal vector according to the embodiments of the present disclosure.

FIG. 8 is a flowchart of a method for determining a confidence of a candidate elevation value according to the embodiments of the present disclosure.

FIG. 9 is a schematic diagram of an interpolation completion process according to the embodiments of the present disclosure.

FIG. 10 is a flowchart of optimization based on a graph propagation algorithm according to the embodiments of the present disclosure.

FIG. 11 is a schematic diagram of a road network graph according to the embodiments of the present disclosure.

FIG. 12 is a schematic diagram of an elevation category candidate set of a road and a corresponding candidate graph according to the embodiments of the present disclosure.

FIG. 13 is a schematic diagram of a graph propagation optimization process according to the embodiments of the present disclosure.

FIG. 14 is a flowchart of a hole filling method according to the embodiments of the present disclosure.

FIG. 15 is a schematic diagram of hole filling effects of an intersection according to the embodiments of the present disclosure.

FIG. 16 is a schematic diagram of a compositional structure of an elevation information processing apparatus according to the embodiments of the present disclosure.

FIG. 17 is a schematic diagram of a compositional hardware structure of an electronic device according to the embodiments of the present disclosure.

FIG. 18 is a schematic diagram of a compositional hardware structure of another electronic device according to the embodiments of the present disclosure.

DESCRIPTION OF EMBODIMENTS

To make objectives, technical solutions, and advantages of embodiments of the present disclosure clearer, the following clearly and completely describes the technical solutions of the present disclosure with reference to the accompanying drawings in the embodiments of the present disclosure. It is clear that the described embodiments are a part rather than all of the embodiments of the technical solutions of the present disclosure. Persons of ordinary skill in the art can obtain other embodiments based on the embodiments in the present disclosure file without creative efforts.

The following describes a part of concepts involved in the embodiments of the present disclosure.

Elevation: is a distance between a point and an absolute datum along a direction of a plumb line, which is referred to as an absolute elevation, an elevation for short. The absolute datum is generally based on a characteristic sea level at a seashore location, and an elevation of the characteristic sea level is 0.000 meters. A distance between a point and an assumed datum level along the direction of the plumb line is referred to as an assumed elevation. In the embodiments of the present disclosure, elevation information is an elevation value of the point. In the embodiments of the present disclosure, there are three types of elevation values: a candidate elevation value, an effective elevation value, and a target elevation value. The candidate elevation value is an elevation value obtained through point cloud recognition. The effective elevation value is an elevation value obtained by performing weighted fusion on the candidate elevation value. The target elevation value is an elevation value finally determined through optimization based on a graph propagation algorithm.

Point cloud: is also referred to as a laser point cloud, and is a set of laser scanning points obtained by performing laser scanning on a surface of an object in a three-dimensional space. A point in the point cloud may correspond to a point on the surface of the object in the three-dimensional space. Therefore, the point cloud may be used to represent the object in the three-dimensional space. In a service scenario related to a high-precision map, a point cloud may be acquired for a road space, and a point cloud part belonging to a road surface may be recognized from the acquired point cloud. In the embodiments of the present disclosure, a point cloud recognition result is a result of recognizing the point cloud acquired for the road space in a target region, and includes longitude and latitude information, an elevation value, category information (for example, a lane line category or a guardrail category), and the like of the point in the point cloud.

Topological relationship: is a connectivity relationship (also referred to as a trafficability relationship) between roads. For example, trafficability between a road A and a road B indicates that the road A and the road B are connected to each other. In an intelligent driving or autonomous driving scenario, a vehicle may travel from one road/lane to another road/lane based on a connectivity relationship between roads/lanes, so that the vehicle implements intelligent driving, autonomous driving, or the like based on a high-precision map.

Random sample consensus (RANSAC) algorithm: is an algorithm for calculating a parameter of a mathematical model for data based on a sample data set including abnormal data, to obtain effective sample data. A basic assumption of the RANSAC algorithm is that a sample includes correct data (inlier, data that can be described by a model, also referred to as an inlier), and also includes abnormal data (outlier, data that deviates from a normal range far and cannot adapt to the mathematical model, also referred to as an outlier), that is, the data set includes noise. The abnormal data may be generated due to incorrect measurement, incorrect assumption, incorrect calculation, or the like. In addition, it is also assumed in RANSAC that, given a correct set of data, there is a method for calculating a model parameter that conforms to the data.

An elevation information processing method in the embodiments of the present disclosure may be applied to the field of maps, the field of traffic, the field of autonomous driving, and the like.

For autonomous driving, a change value of elevation information in geographical data is very important information, which helps a vehicle better perform longitudinal and lateral control. For example, in an autonomous driving application, slope information needs to be determined based on an elevation difference between adjacent ground objects, to determine a driving policy.

However, currently, an automatic elevation information processing method for the field of maps is mainly a trajectory-based road network matching method, in which a trajectory point of a vehicle is used to match a road network. A distance value between the trajectory point of the vehicle and a road in the road network is calculated, and a road matching the trajectory point of the vehicle is determined based on the distance value. However, because the trajectory point of the vehicle is acquired using a global positioning system (GPS) positioning technology, and is limited by positioning precision of a GPS, a location of the trajectory point has a floating error. Therefore, the existing road network matching method is prone to incorrect matching.

Therefore, accuracy of the current trajectory-based road network matching method is affected by a plurality of factors such as precision of the road network, the positioning precision of the GPS, and a length of a trajectory, and an upper limit of the accuracy is difficult to raise.

In view of this, the embodiments of the present disclosure provide an elevation information processing method and apparatus, an electronic device, and a storage medium. The elevation information processing method in the present disclosure is implemented based on a point cloud recognition result. A plurality of sampling points are determined from the point cloud recognition result, and candidate elevation values of the plurality of sampling points are obtained. Plane fitting is performed on the plurality of sampling points, so that a noise point can be effectively removed, and a wanted target sampling point can be obtained. Based on this, candidate elevation values of a same target sampling point may be fused based on confidences of the candidate elevation values corresponding to the target sampling point, and an effective elevation value is optimized based on a topological relationship between roads, to obtain a processed target elevation value. The processing process is implemented based on the point cloud recognition result. Compared with the current trajectory-based road network matching method in which a trajectory is used as a main basis, in the present disclosure, elevation precision of road lane data is directly evaluated based on the point cloud recognition result. The point cloud recognition result is not affected by an installation location of the GPS and the like, includes more abundant information than trajectory data, and is more accurate than the trajectory data. Based on this, automatic elevation processing is effectively performed on data such as a road lane using methods such as resampling, plane fitting, and graph propagation, so that the accuracy can be effectively improved.

Based on this, elevation data is automatically assigned to the road lane on a map based on the point cloud recognition result, so that the quality of the elevation data on the current map can be effectively improved, improving realness of a simulated reality environment in an autonomous driving simulation stage, to provide a simulated environment consistent with a reality environment to an object having a requirement (for example, a driving object).

The following describes a part of the embodiments of the present disclosure with reference to the accompanying drawings for the specification. The embodiments described herein are merely for describing and explaining the present disclosure but are not for limiting the present disclosure. The embodiments of the present disclosure and features in the embodiments may be combined with each other in a case of no conflict.

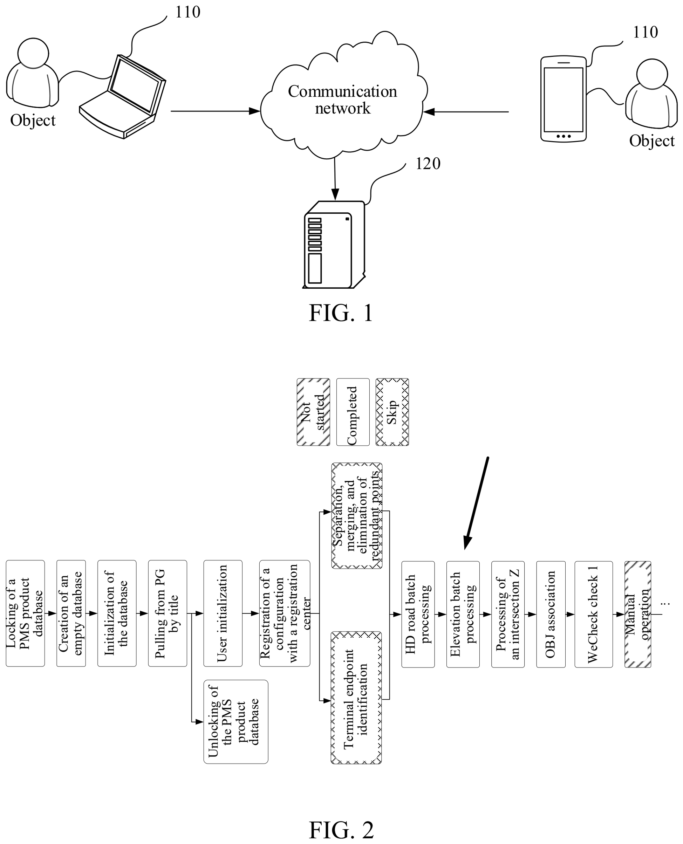

FIG. 1 is a schematic diagram of an application scenario of the embodiments of the present disclosure. The diagram of the application scenario includes two terminal devices 110 and one server 120.

In the embodiments of the present disclosure, the terminal device 110 includes but is not limited to a mobile phone, a tablet computer, a notebook computer, a desktop computer, an e-book reader, a smart voice interaction device, a smart household appliance, an in-vehicle terminal, an aircraft, and the like. A client related to map and elevation information processing may be installed on the terminal device. The client may be software (for example, a browser or map software), or may be a web page, an applet, or the like. The server 120 is a background server corresponding to the software, the web page, the applet, or the like, or is a server specifically configured for elevation information processing. This is not specifically limited in the present disclosure. The server 120 may be an independent physical server, a server cluster or distributed system including a plurality of physical servers, or a cloud server providing a basic cloud computing service such as a cloud service, a cloud database, cloud computing, a cloud function, cloud storage, a network service, cloud communication, a middleware service, a domain name service, a security service, a content delivery network (CDN), or a big data and artificial intelligence platform.

The elevation information processing method in the embodiments of the present disclosure may be performed by an electronic device. The electronic device may be the terminal device 110 and the server 120. In other words, the method may be performed by the terminal device 110 or the server 120 alone, or may be performed by the terminal device 110 and the server 120 together. For example, when the method is performed by the server 120 alone, the server 120 may first obtain a plurality of point clouds of a target region acquired at different time, recognize the point clouds to obtain a plurality of point cloud recognition results, and sample lane data of a road in the target region to obtain a plurality of sampling points. Further, the server 120 determines a plurality of sampling points from each obtained point cloud recognition result, and obtains a candidate elevation value set of each of the plurality of sampling points. The server 120 fits the plurality of sampling points based on each point cloud recognition result, to obtain a fitting result, and determines a target sampling point in the plurality of sampling points based on the fitting result. Further, the server 120 performs weighted fusion on each candidate elevation value in a same candidate elevation value set based on a confidence of each candidate elevation value in a candidate elevation value set of each target sampling point, to obtain an effective elevation value of each target sampling point. In addition, the server 120 may further optimize the effective elevation value of each target sampling point based on a topological relationship between roads in the target region, to obtain a target elevation value of each target sampling point.

Based on the foregoing, the server 120 may improve quality of elevation data on a map based on the obtained target elevation value, improving realness of a simulated reality environment in an autonomous driving simulation stage, to provide a simulated environment consistent with a reality environment to an object having a requirement.

FIG. 2 is a schematic diagram of an elevation data processing procedure in a data production stage according to the embodiments of the present disclosure. The data production stage means transferring map data to a demand side such as a vehicle factory.

In the data production stage, the elevation data processing procedure may be added. In an elevation batch processing part indicated by the arrows in FIG. 2, road lane data and the like is automatically processed to meet a requirement of a customer for elevation precision. Therefore, the elevation information processing method in the embodiments of the present disclosure may be applied to the foregoing data production stage, to improve accuracy of elevation information in map data.

For example, the terminal device 110 may communicate with the server 120 through a communication network.

The communication network may be a wired network or a wireless network.

FIG. 1 is merely an example for description. Actually, quantities of terminal devices and servers are not limited and are not specifically limited in the embodiments of the present disclosure.

In the embodiments of the present disclosure, when there are a plurality of servers, the plurality of servers may be grouped into a blockchain, and the servers are nodes on the blockchain. For example, related processing data involved in the elevation information processing method disclosed in the embodiments of the present disclosure may be stored on the blockchain, for example, the sampling point, the point cloud recognition result, the candidate elevation value, the confidence, a feature evaluation value, the effective elevation value, and the target elevation value.

In addition, the embodiments of the present disclosure may be applied to various scenarios, including but not limited to a cloud technology, artificial intelligence, intelligent traffic, assisted driving, and the like.

Related data such as user information may be involved in the embodiments of the present disclosure. When the embodiments are applied to a specific product or technology, a license or consent of a user needs to be obtained, and collection, use, and processing of the related data comply with related laws and regulations and standards of related countries and regions.

In addition, in the embodiments of the present disclosure, collection, use, and processing of related data such as elevation information processing (for example, acquisition of the point cloud in the target region) also comply with relevant laws, regulations, and standards of relevant countries and regions.

The elevation information processing method provided in the embodiments of the present disclosure is described below with reference to the accompanying drawings based on the application scenario described above.

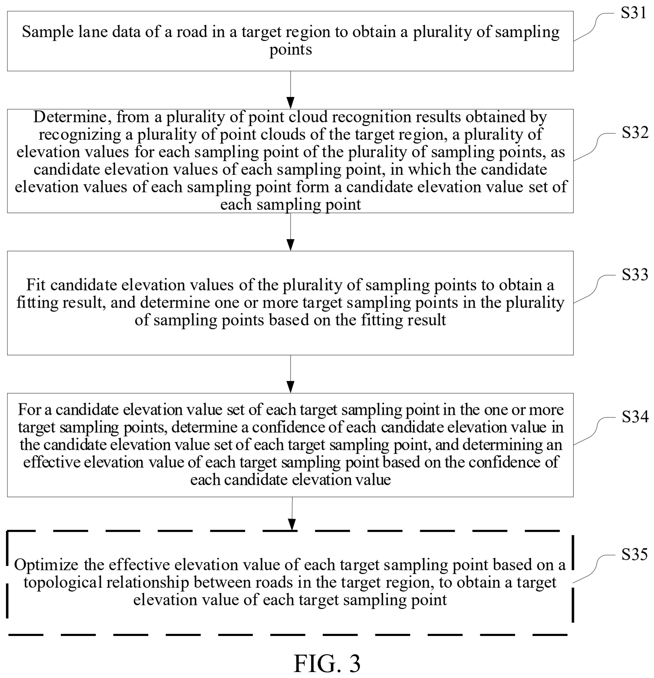

FIG. 3 is a flowchart of an elevation information processing method according to the embodiments of the present disclosure. An example in which a server is an execution body is used. A specific procedure of the method includes the following operations S31 to S35.

S31: Sample lane data of a road in a target region to obtain a plurality of sampling points.

The target region may be any location including a road in a real world. In the embodiments of the present disclosure, the road may alternatively be a road section.

In the embodiments of the present disclosure, equidistant resampling may be performed on the lane data (for example, a lane line) of the road in the target region to obtain the plurality of sampling points. For example, when equidistant resampling is performed, if a distance between every two adjacent sampling points on the lane line is 2 meters, the sampling points may be stored in a matrix of shape $S[m, n, 2]$, where m represents a quantity of samples on each lane, n represents a quantity of lanes, and the dimension of size 2 stores longitude and latitude coordinates, e.g., $(x, y)$ of each sample point included in the lane data. The lane data is an element on an electronic map, and is a type of map data. The lane data may be, for example, lane line data. One road may have a plurality of lane lines, corresponding to a plurality of lanes.

In addition to the equidistant resampling manner listed above, the lane data of the road in the target region may alternatively be sampled in another manner, for example, may alternatively be sampled based on a random distance. This is not specifically limited in this specification.

S32: Determine, from a plurality of point cloud recognition results obtained by recognizing a plurality of point clouds of the target region, a plurality of elevation values for each sampling point of the plurality of sampling points, each elevation value corresponding to one cloud point recognition result, and using the plurality of elevation values of each sampling point as candidate elevation values of each sampling point, to form a candidate elevation value set of each sampling point.

The sampling point in the lane data is projected to a lane line segment in the point cloud recognition result, and a point projected to is considered as a point corresponding to the sampling point in the point cloud recognition result, and represents the sampling point. In the embodiments of the present disclosure, point cloud acquisition may be performed on the target region at different times, and the plurality of acquired point clouds of the target region are recognized. For example, point cloud recognition is performed for a plurality of times, to obtain point cloud recognition results of the point clouds acquired at different times. For example, first point cloud acquisition is performed on the target region in Year Y1, and a point cloud obtained through the first point cloud acquisition is recognized to obtain a point cloud recognition result 1 of the target region. Second point cloud acquisition is performed on the target region in Year Y2, and a point cloud obtained through the second point cloud acquisition is recognized to obtain a point cloud recognition result 2 of the target region. Third point cloud acquisition is performed on the target region in Year Y3, and a point cloud obtained through the third point cloud acquisition is recognized to obtain a point cloud recognition result 3 of the target region.

The point cloud recognition result in the embodiments of the present disclosure may include longitude and latitude information and elevation values of points. The elevation values obtained through point cloud recognition may be denoted as candidate elevation information, also referred to as candidate elevation values.

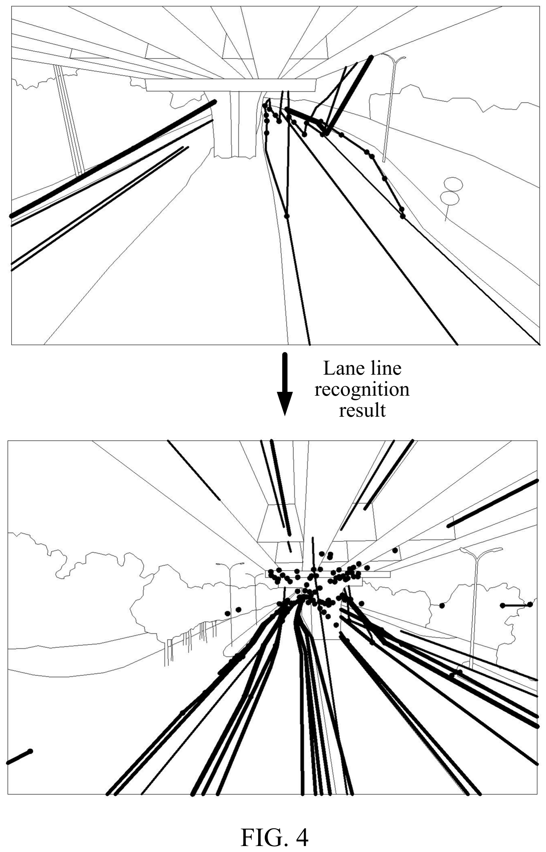

FIG. 4 is a schematic diagram of a lane line recognition result of a target region according to the embodiments of the present disclosure. FIG. 4 indicates that after point cloud recognition is performed on the target region, the lane lines in the target region may be recognized.

In addition, point cloud recognition may recognize not only the lane lines but also points of other categories in the target region. For example, in the embodiments of the present disclosure, the target region includes at least the road, and there is at least one lane and a corresponding lane line on the road. In addition, the target region may further include guardrails, kerbs, painted road arrows, letters, scenes, and the like. Correspondingly, the sampling point in the target region includes but is not limited to a part or all of the following: a lane line point, a guardrail point, a kerb point, a painted road arrow point, a letter point, a scene point, and the like.

According to the embodiments of the present disclosure, for one sampling point, one candidate elevation value of the sampling point may be obtained from each point cloud recognition result. For a same sampling point, a plurality of candidate elevation values may be obtained from the plurality of point cloud recognition results, and the candidate elevation values may form a candidate elevation value set of the sampling point.

For example, for a sampling point P1, a candidate elevation value $z_{11}$ of the sampling point P1 may be extracted from the point cloud recognition result 1, a candidate elevation value $z_{12}$ of the sampling point P1 may be extracted from the point cloud recognition result 2, and a candidate elevation value $z_{13}$ of the sampling point P1 may be extracted from the point cloud recognition result 3. $z_{11}$, $z_{12}$, and $z_{13}$ form a candidate elevation value set corresponding to the sampling point P1.

For another example, for a sampling point P2, a candidate elevation value $z_{21}$ of the sampling point P2 may be extracted from the point cloud recognition result 1, a candidate elevation value $z_{22}$ of the sampling point P2 may be extracted from the point cloud recognition result 2, and a candidate elevation value $z_{23}$ of the sampling point P2 may be extracted from the point cloud recognition result 3. $z_{21}$, $z_{22}$, and $z_{23}$ form a candidate elevation value set corresponding to the sampling point P2.

By analogy, the candidate elevation value set of each sampling point in the sampling point matrix can be obtained.

S33: Fit the plurality of sampling points to obtain a fitting result, and determine one or more target sampling points in the plurality of sampling points based on the fitting result.

Based on the foregoing point cloud recognition results, plane fitting may be further performed on the sampling points in the sampling point matrix to obtain a fitted plane(s). Plane fitting may be performed on the sampling points in the sampling point matrix based on the elevation values of the sampling points.

In the embodiments of the present disclosure, there are a plurality of manners for fitting the sampling points, for example, a random sample consensus (RANSAC) fitting algorithm and a linear fitting algorithm.

Performing plane fitting on the elevation values in the point cloud recognition result based on the RANSAC algorithm in machine learning is used as an example below. The RANSAC algorithm is an iterative method for estimating a parameter of a mathematical model using observed data points. A data point set may be repeatedly selected to estimate the mathematical model, and iteration is performed until a good mathematical model is estimated. The data point includes an inlier and an outlier. The outlier has no value in model estimation. Therefore, this method may also be referred to as an outlier detection method. The inlier is a correct sampling point, an inlier point, or a correct sample in samples. The outlier is a noise point (for example, a point having a very large error during measurement or a point having an inaccurate data value) in a sample, and is often referred to as an outlier point or a noise point.

In summary, for a set of observation data including many noise points, if a model is directly used for data fitting, the model is affected by the noise points, and a larger proportion of the noise points indicates a less accurate fitted model. RANSAC may be used to solve an outlier problem (noise) in the sample, and can handle a maximum of 50% of outlier cases.

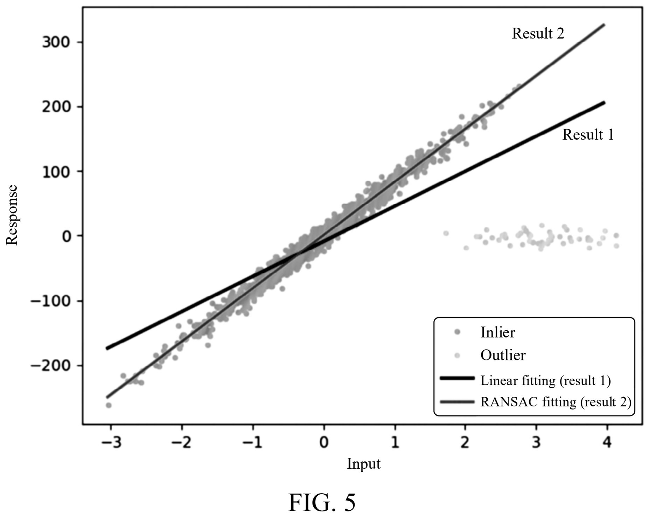

FIG. 5 is a schematic diagram of comparison between effects of a RANSAC fitting algorithm and a linear fitting algorithm according to the embodiments of the present disclosure. A result 2 represents a fitting result obtained based on the RANSAC fitting algorithm, and a result 1 represents a fitting result obtained based on the linear fitting algorithm. It can be learned from FIG. 5 that when line fitting is performed based on the RANSAC fitting algorithm, outliers can be substantially eliminated, and fitting is performed based on inliers. However, when line fitting is performed based on the linear fitting algorithm, the foregoing effects cannot be achieved.

Similarly, when surface fitting (plane fitting) is performed based on the RANSAC fitting algorithm, the noise points can also be effectively eliminated.

Based on the foregoing idea, in the embodiments of the present disclosure, plane fitting may be performed on the plurality of sampling points included in the sampling point matrix using the RANSAC fitting algorithm based on the obtained point cloud recognition results, to obtain the fitted plane(s). In this fitting process, the noise points (that is, the outliers) in the plurality of sampling points can be effectively eliminated, and remaining sampling points are target sampling points in the embodiments of the present disclosure.

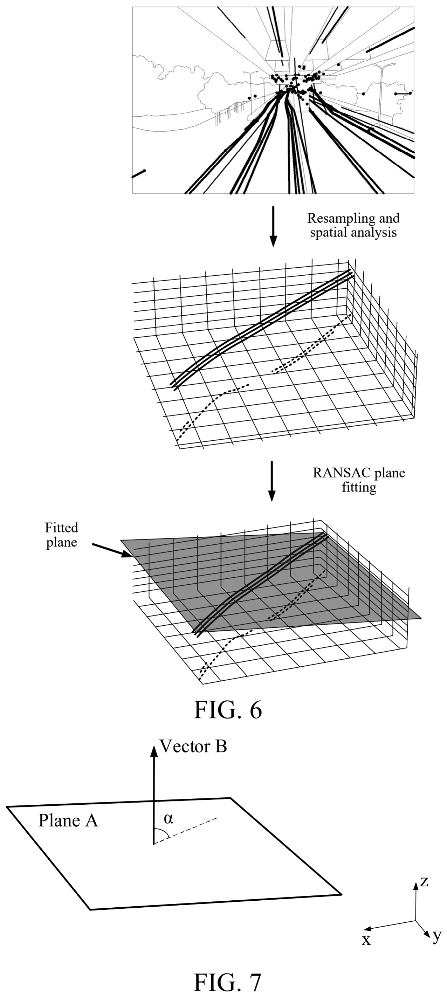

FIG. 6 is a schematic diagram of a plane fitting related process according to the embodiments of the present disclosure. As shown in FIG. 6, the sampling points may be first acquired through equidistant resampling listed above or in another manner, to perform spatial analysis on the target region. Based on this, plane fitting may be performed on the sampling points based on the RANSAC algorithm and with reference to the point cloud recognition results, to obtain the fitted plane. A grey plane shown in FIG. 6 is an example of the fitted plane according to the embodiments of the present disclosure.

In the embodiments of the present disclosure, when the target sampling point is obtained through plane fitting, the obtaining may include the following:

Plane fitting is performed on the plurality of sampling points based on the plurality of elevation values of each of the plurality of sampling points, to obtain the fitted plane of the target region.

For example, plane fitting may be performed on the plurality of sampling points based on the RANSAC fitting algorithm, to obtain the fitted plane.

In the embodiments of the present disclosure, after the fitted plane is obtained using the RANSAC algorithm, fitting quality of the fitted plane needs to be determined. If there is a plane side deviation due to deficiency of sampling points (due to a large elevation deviation between sampling points, the fitted plane has an excessively large inclination, and forms an angle less than an angle threshold with a standard normal vector), surface fitting needs to be degraded to line fitting.

An exemplary method for analyzing whether the side deviation occurs is:

comparing the angle between the fitted plane and the standard normal vector with a first preset angle threshold, where the standard normal vector is a normal vector perpendicular to a horizontal ground.

If the angle between the fitted plane and the standard normal vector is not less than the first preset angle threshold, it is considered that the fitted plane has no plane side deviation, and the fitting quality of the fitted plane reaches a standard. Therefore, a sampling point on the fitted plane is used as a target sampling point. A sampling point out of the fitted plane may be understood as an eliminated noise point.

On the contrary, if the angle between the fitted plane and the standard normal vector is less than the first preset angle threshold, it is considered that the fitted plane has the plane side deviation, and the fitting quality of the fitted plane does not reach a standard. Surface fitting needs to be degraded to line fitting, and then the target sampling point is determined based on a line fitting result.

According to the foregoing embodiments, sampled noise points can be effectively removed, and then a subsequent processing process is performed based on the remaining target sampling point, so that elevation precision of the determined sampling point can be effectively improved. In addition, in the foregoing embodiments, a process of determining the fitting quality of the fitted plane is further added, to effectively avoid impact caused by deficiency of samples, low precision, and the like.

FIG. 7 is a schematic diagram of a plane and a standard normal vector according to the embodiments of the present disclosure. It is assumed that a plane A is the fitted plane, and a vector B is the standard normal vector. When whether the plane A has a side deviation is analyzed, an angle $\alpha$ between the plane A and the vector B may be analyzed. The angle $\alpha$ may also be understood as an angle between a projection of the vector B on the plane A and the vector B. The vector B shown in FIG. 7 is parallel to a z-axis, that is, the standard normal vector in the embodiments of the present disclosure is perpendicular to the horizontal ground.

Clearly, when the plane A is a horizontal plane, the vector B is perpendicular to the plane A, and the angle $\alpha$ between the vector B and the plane A is 90°; or when the plane A is not a horizontal plane, the angle $\alpha$ between the vector B and the plane A is less than 90°.

In the embodiments of the present disclosure, the first preset angle threshold may be flexibly set according to experience or a requirement. A value of the first preset angle threshold is a positive number, and is less than 90°. If the first preset angle threshold is set to 10°, when the angle between the vector B and the plane A is less than 10°, the fitting quality of the plane A is poor, and the plane side deviation occurs.

When the fitted plane has the side deviation, the foregoing surface fitting needs to be degraded to line fitting, and then whether the side deviation occurs in the line fitting result is further analyzed.

An example is as follows.

If the angle between the fitted plane and the standard normal vector is less than the first preset angle threshold, two-dimensional longitude and latitude information (for example, longitude and latitude coordinates) of each sampling point is converted into a linear reference distance. Further, line fitting is performed on the plurality of sampling points based on the linear reference distances of the plurality of sampling points, to obtain a fitted straight line result of the target region. The fitted straight line result includes at least one fitted straight line.

The linear reference distance indicates a distance between the sampling point and a starting point of a lane line to which the sampling point belongs. The lane line is a segment of lane line in the target region. Therefore, the starting point of the lane line is also in the target region. For example, a sampling point is an ith sampling point on a lane line on a road in the target region. If the to-be-fitted sampling points are sampled based on a sampling distance of two meters, a linear reference distance corresponding to the ith sampling point is 2i. During line fitting, a horizontal coordinate of the ith sampling point is 2i, and a vertical coordinate is still an elevation value.

In the embodiments of the present disclosure, line fitting may be performed on the sampling points based on the RANSAC algorithm listed above, to effectively eliminate the noise points.

Similar to the foregoing surface fitting, after the fitted straight line result is obtained using the RANSAC algorithm, the fitting quality of the fitted straight line result needs to be determined. If there is a fitted straight line side deviation due to deficiency of sampling points (for example, due to a large elevation deviation between sampling points, the fitted curve has an excessively large inclination, and forms an angle less than an angle threshold with a standard normal vector), interpolation needs to be flattened through linear interpolation.

For example, after the fitted straight line result is obtained, a fitted straight line having a straight line side deviation and a fitted straight line having no straight line side deviation in the fitted straight line result are further analyzed in a manner similar to the foregoing manner of analyzing whether the fitted plane has the side deviation.

For example, if an angle between a fitted straight line and the standard normal vector is less than a second preset angle threshold, the fitted straight line has a side deviation; or if an angle between a fitted straight line and the standard normal vector is less than a second preset angle threshold, the fitted straight line has no side deviation.

Similar to the foregoing manner of determining the plane side deviation, when a straight line C is horizontal, the vector B is perpendicular to the straight line C, and an angle between the vector B and the straight line C is 90°; or when a straight line C is non-horizontal, an angle between the vector B and the straight line C is less than 90°. For example, the second preset angle threshold is 10°. When the angle between the vector B and the straight line C is less than 10°, fitting quality of the straight line C is poor, and straight line fitting side deviation occurs.

In the embodiments of the present disclosure, a fitted straight line having no side deviation is denoted as a target fitted straight line. In other words, the target fitted straight line is a fitted straight line whose angle with the standard normal vector is not less than the second preset angle threshold. Further, a sampling point on the target fitted straight line in the fitted straight line result is used as a target sampling point.

Generally, even if a fitted straight line has a side deviation, the side deviation does not persist, and there are usually target fitted straight lines having no side deviation before and after the fitted straight line (for example, along a longitudinal direction of the road). Therefore, linear interpolation may be performed on such a fitted straight line having a side deviation, to flatten the fitted straight line. This is described in detail below, and details are not described herein again.

According to the foregoing embodiments, when the plane side deviation occurs, surface fitting is degraded to line fitting. In a scenario of line fitting, problems caused by deficiency of samples and the like are effectively resolved, and elevation processing precision is improved.

S34: Perform the following operations for a candidate elevation value set of each target sampling point in the one or more target sampling points: determining a confidence of each candidate elevation value in each candidate elevation value set of the target sampling point, and determining an effective elevation value of each target sampling point based on the confidence of each candidate elevation value.

Based on S32, the sampling points in the sampling point matrix may be filtered, to effectively filter out the noise points, to obtain the target sampling point. Further, for the respective target sampling points, each target sampling point corresponds to one candidate elevation value set. Each candidate elevation value set includes at least one candidate elevation value, each candidate elevation value corresponds to one confidence (also referred to as confidence value herein), and the confidence may be determined based on a point cloud recognition result to which the candidate elevation value belongs and reference map data.

In the embodiments of the present disclosure, for a same target sampling point, based on a confidence of each candidate elevation value in a candidate elevation value set corresponding to the target sampling point, weighted fusion may be performed on the candidate elevation values to obtain an effective elevation value of the target sampling point.

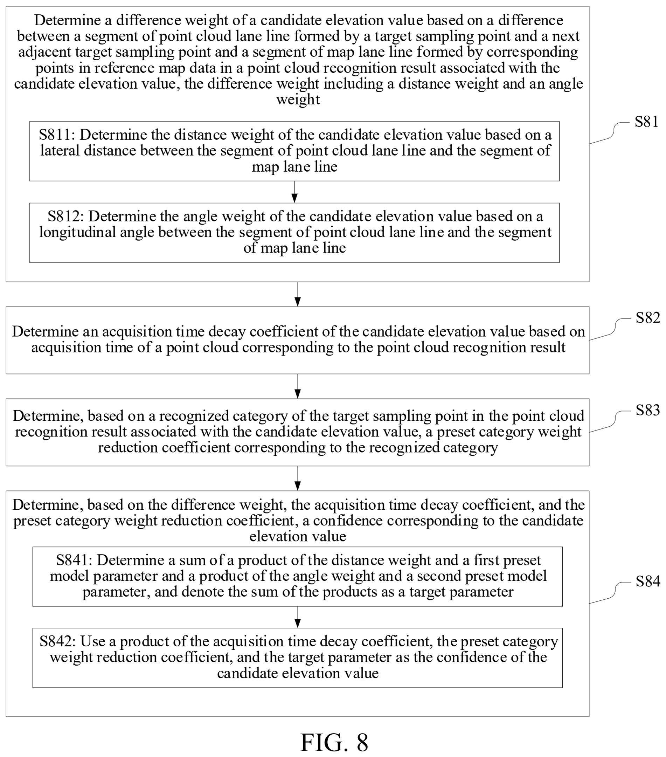

In all the embodiments of the present disclosure, the confidence of each candidate elevation value in the candidate elevation value set of the target sampling point may be determined in a manner shown in FIG. 8. FIG. 8 is a flowchart of a method for determining a confidence of a candidate elevation value according to the embodiments of the present disclosure, including the following operations S81 to S84.

S81: Determine a difference weight of the candidate elevation value based on a difference between a segment of point cloud lane line formed by the target sampling point and a next adjacent target sampling point and a segment of map lane line formed by corresponding points in the reference map data in a point cloud recognition result associated with the candidate elevation value, the candidate elevation value being one candidate elevation value of the target sampling point.

A point cloud recognition result associated with a candidate elevation value is specifically a cloud point recognition result from which the candidate elevation value is extracted. For example, as listed above, the sampling point P1 is a target sampling point. The candidate elevation value z11 of the sampling point is extracted from the point cloud recognition result 1, so that z11 is associated with the point cloud recognition result 1. Similarly, the candidate elevation value z12 of the sampling point is associated with the point cloud recognition result 2, and the candidate elevation value z13 of the sampling point is associated with the point cloud recognition result 3.

In the embodiments of the present disclosure, for a same target sampling point, different candidate elevation values are associated with different point cloud recognition results. For different target sampling points, candidate elevation values of the target sampling points may be associated with a same point cloud recognition result. For example, the candidate elevation value z11 of the target sampling point P1 and the candidate elevation value z21 of the target sampling point P2 are both associated with the point cloud recognition result 1.

In addition, in the embodiments of the present disclosure, for a target sampling point, a next adjacent target sampling point may be in a specified direction (for example, an extension direction of the lane line, which may be specifically set during sampling). For example, for the target sampling point P1, a next adjacent target sampling point is a next target sampling point after P1 along a lane line on which the target sampling point P1 is located.

For example, there are 10 sampling points in total on a lane line, which are sequentially denoted as P1 to P10 along a specified direction. After the noise points P3 and P5 are removed, the remaining eight sampling points are target sampling points. In this case, for P1, a next adjacent target sampling point is P2; for P2, a next adjacent target sampling point is P4; for P4, a next adjacent target sampling point is P6; and for P6, a next adjacent target sampling point is P7. The rest can be deduced by analogy.

The difference weight includes at least one of a distance weight and an angle weight.

An example in which the difference weight includes both the distance weight and the angle weight is used. An example of S81 includes the following operations S811 and S812.

S811: Determine the distance weight of the candidate elevation value based on a lateral distance between the segment of point cloud lane line and the segment of map lane line. The lateral distance may be understood as a distance between a sampling point on the segment of map lane line and the point cloud lane line segment.

A lateral direction indicates a direction perpendicular to the extension direction of the lane line. A longitudinal direction indicates the extension direction of the lane line. Therefore, the lateral distance indicates a distance between the point cloud lane line and the map lane line in the direction perpendicular to the extension direction of the lane line.

In the embodiments of the present disclosure, an example of S811 is as follows.

The distance weight of the candidate elevation value is determined based on a ratio of a square of the lateral distance to a square of a third preset model parameter.

In the embodiments of the present disclosure, the third preset model parameter is a preset distance parameter. The distance parameter may be flexibly set according to experience, an actual requirement, or the like, and is usually a positive number. For example, a value of the third preset model parameter is 20, with a unit being centimeter, that is, represents 20 cm. Alternatively, the third preset model parameter may be any other distance value, and details are not described herein again.

For example, a calculation formula for the distance weight is as follows:

$$w_{dis} = \exp\left(-d^{**}2/2/\sigma 1^{**}2\right) \qquad \text{(Formula 1)}$$

$w_{dis}$ represents the distance weight, $d$ is the lateral distance, $\sigma 1$ is the third preset model parameter, $d^{**}2$ represents a square of $d$, that is, the square of the lateral distance, and $\sigma 1^{**}2$ represents a square of $\sigma 1$, that is, the square of the third preset model parameter.

The calculation manner for the distance weight listed in Formula 1 is merely a simple example. In addition, any manner of calculating the distance weight based on the ratio of the square of the lateral distance to the square of the third preset model parameter is applicable to the embodiments of the present disclosure, and details are not described herein again.

In the foregoing embodiments, a lateral difference between the segment of point cloud lane line and the segment of map lane line may be effectively analyzed with reference to the distance difference between the segment of point cloud lane line and the segment of map lane line, and the distance weight calculated based on the difference may be used as one of calculation parameters for the confidence, to evaluate accuracy of the candidate elevation value.

S812: Determine the angle weight of the candidate elevation value based on a longitudinal angle between the segment of point cloud lane line and the segment of map lane line.

The longitudinal angle indicates an angle between the segment of point cloud lane line and the segment of map lane line in the extension direction of the lane line.

In the embodiments of the present disclosure, an example of S812 is as follows.

The angle weight of the candidate elevation value is determined based on a ratio of a square of the longitudinal angle to a square of a fourth preset model parameter.

In the embodiments of the present disclosure, the fourth preset model parameter is a preset angle parameter. The angle parameter may be flexibly set according to experience, an actual requirement, or the like, and is usually a positive number. For example, a value of the fourth preset model parameter is 15, with a unit being degree (°), that is, represents 15°. Alternatively, the fourth preset model parameter may be any other angle, and details are not described herein again.

For example, a calculation formula for the angle weight is as follows:

$$w_{angle} = \exp\left(-\alpha^{**}2/2/\sigma2^{**}2\right) \qquad \text{(Formula 2)}$$

$w_{angle}$ represents the angle weight, $\alpha$ is the longitudinal angle, $\sigma2$ is the fourth preset model parameter, $\alpha^{**}2$ represents a square of $\alpha$, that is, the square of the longitudinal angle, and $\sigma2^{**}2$ represents a square of $\sigma2$, that is, the square of the fourth preset model parameter.

The calculation manner for the angle weight listed in Formula 2 is merely a simple example. In addition, any manner of calculating the angle weight based on the ratio of the square of the longitudinal angle to the square of the fourth preset model parameter is applicable to the embodiments of the present disclosure, and details are not described herein again.

In the foregoing embodiments, a longitudinal difference between the segment of point cloud lane line and the segment of map lane line may be effectively analyzed with reference to the angle difference between the segment of point cloud lane line and the segment of map lane line, and the angle weight calculated based on the difference may be used as one of calculation parameters for the confidence, to evaluate accuracy of the candidate elevation value.

S82: Determine an acquisition time decay coefficient of the candidate elevation value based on acquisition time of a point cloud corresponding to the point cloud recognition result. The acquisition time decay coefficient may be a coefficient reflecting the decay degree of reliability of a candidate elevation value as the time elapses. A candidate elevation value which is obtained at an earlier time may have a larger time decay coefficient.

In the embodiments of the present disclosure, as described in S32, the acquisition time of the point cloud recognition result may be a time at which point cloud recognition (including point cloud acquisition and point cloud recognition) is performed on the target region to obtain the point cloud recognition result, or may be a point cloud acquisition time. Different point cloud recognition results correspond to different acquisition times. It is assumed that a time unit of the acquisition time is year. For example, as listed above, acquisition time of the point cloud recognition result 1 is Year Y1, acquisition time of the point cloud recognition result 2 is Year Y2, and acquisition time of the point cloud recognition result 3 is Year Y3.

The time unit may be further detailed, for example, a specific month, a specific day, or a specific hour, minute, or second. Using year as the unit is merely a simple example, and other time units are also applicable to the embodiments of the present disclosure. Details are not described herein again.

When an acquisition time decay coefficient corresponding to a candidate elevation value is determined based on the acquisition time of each point cloud recognition result, the acquisition time attention coefficient may be specifically determined based on a difference between acquisition time of a point cloud recognition result associated with the candidate elevation value and the acquisition time of each point cloud recognition result. An example is as follows.

The acquisition time decay coefficient is determined based on a difference between the acquisition time of the point cloud recognition result associated with the candidate elevation value and maximum acquisition time. The maximum acquisition time is a maximum value in the acquisition time of the point cloud recognition results.

For example, the foregoing three point cloud recognition results are used as an example. The acquisition time corresponding to the three point cloud recognition results is Y1, Y2, and Y3. If a maximum value in the three pieces of acquisition time is Y3, the maximum acquisition time is Y3.

If the acquisition time of the point cloud recognition result 1 associated with the candidate elevation value $z11$ is Y1, an acquisition time decay coefficient corresponding to $z11$ is determined based on a difference between Y1 and Y3.

For example, the acquisition time decay coefficient of the candidate elevation value may be determined based on a product of a fifth preset model parameter and the difference between the acquisition time of the point cloud recognition result associated with the candidate elevation value and the maximum acquisition time. In the embodiments of the present disclosure, the fifth preset model parameter is a preset coefficient parameter. The coefficient parameter may be flexibly set according to experience, an actual requirement, or the like. For example, a value of the fifth preset model parameter is 1e-4. Alternatively, the fifth preset model parameter may be any other coefficient, and details are not described herein again.

For example, a calculation formula for the acquisition time decay coefficient is as follows:

$$\tau1 = \exp\left(\beta * (t - \max(t))\right) \qquad \text{(Formula 3)}$$

$\tau1$ is the acquisition time decay coefficient, t is the acquisition time of the point cloud recognition result associated with the candidate elevation value, max(t) is the maximum acquisition time, and $\beta$ is the fifth preset model parameter.

The calculation manner for the acquisition time decay coefficient listed in Formula 3 is merely a simple example. In addition, any manner of calculating the acquisition time decay coefficient based on the difference between the acquisition time of the point cloud recognition result associated with the candidate elevation value and the maximum acquisition time is applicable to the embodiments of the present disclosure, and details are not described herein again.

In the foregoing embodiments, the acquisition time decay coefficient is analyzed based on the acquisition time of the point cloud, and the confidence is calculated based on the coefficient. This is equivalent to that impact caused by the acquisition time of the point cloud recognition result is considered. Therefore, accuracy of evaluation of the candidate elevation value can be further improved.

S83: Determine, based on a recognized category of the target sampling point in the point cloud recognition result associated with the candidate elevation value, a preset category weight reduction coefficient corresponding to the recognized category.

In the embodiments of the present disclosure, different sampling points may be of different categories, such as the lane line, the guardrail, the kerb, the painted road arrow, the letter, and the scene that are listed above.

A different category may correspond to a preset coefficient, that is, a preset category weight reduction coefficient. For example, a value of the coefficient ranges from 0 to 1. In this case, different coefficients may be set for different categories, or a same coefficient may be set for a part of categories. This is not specifically limited in this specification.

For example, the guardrail category corresponds to a coefficient of 0.5, and another category corresponds to a coefficient of 1. Certainly, another preset coefficient may be used. Details are not described herein again.

In the embodiments of the present disclosure, the recognized category of the target sampling point obtained through recognition in this recognition process may be determined through point cloud recognition. Each category corresponds to a preset category weight reduction coefficient. For example, the preset category weight reduction coefficient is denoted as $\tau2$. If it is determined, based on the point cloud recognition result 1 associated with the target sampling point P1 this time, P1 belongs to the guardrail category, $\tau2$=0.5; or if P1 belongs to a non-guardrail category, $\tau2$=1.

In the foregoing embodiments, the confidence is calculated based on category obtained through point cloud recognition. This is equivalent to that impact caused by accuracy of classification of the point cloud recognition result is considered. Therefore, the accuracy of evaluation of the candidate elevation value can be further improved.

S84: Determine, based on the difference weight, the acquisition time decay coefficient, and the preset category weight reduction coefficient, the confidence corresponding to the candidate elevation value.

In the embodiments of the present disclosure, based on S81 to S83, a difference weight (including a distance weight $w_{dis}$ and an angle weight $w_{angle}$), an acquisition time decay coefficient $\tau1$, and a preset category weight reduction coefficient $\tau2$ of a candidate elevation value may be determined based on each point cloud recognition result and the reference map data. Then, a confidence corresponding to the candidate elevation value may be determined based on these parameters.

In the embodiments of the present disclosure, an example of S84 includes the following operations S841 and S842.

S841: Determine a sum of a product of the distance weight and a first preset model parameter and a product of the angle weight and a second preset model parameter, and denote the sum of the products as a target parameter.

In the embodiments of the present disclosure, the first preset model parameter and the second preset model parameter are preset weight parameters. The weight parameter may be flexibly set according to experience, actual requirements, and the like, and is usually a positive number with a value ranging from 0 to 1. A sum of the first preset model parameter and the second preset model parameter is 1.

For example, the first preset model parameter is denoted as c1, the second preset model parameter is denoted as c2, c1+c2=1, and values of c1 and c2 are flexibly set according to a requirement. For example, when the distance weight is more important, the first preset model parameter is set to be greater than the second preset model parameter, for example, c1=0.7, and c2=0.3. For another example, when the angle weight is more important, the second preset model parameter is set to be greater than the first preset model parameter, for example, c1=0.4, and c2=0.6. For another example, the first preset model parameter and the second preset model parameter are set to be the same, that is, c1=c2=0.5.

The foregoing values of the first preset model parameter and the second preset model parameter are merely simple examples. Any preset manner is applicable to the embodiments of the present disclosure, and details are not described herein again.

In the embodiments of the present disclosure, the target parameter is $c1 * w_{dis} + c2 * w_{angle}$.

S842: Use a product of the acquisition time decay coefficient, the preset category weight reduction coefficient, and the target parameter as the confidence of the candidate elevation value.

For example, a calculation formula for the confidence is as follows:

$$w_p = \tau1 * \tau2 * (c1 * w_{dis} + c2 * w_{angle}) \qquad \text{(Formula 4)}$$

$w_p$ represents the confidence, $\tau1$ is the acquisition time decay coefficient, $\tau2$ is the preset category weight reduction coefficient, and ($c1 * w_{dis} + c2 * w_{angle}$) is the target parameter.

The calculation manner for the confidence listed in Formula 4 is merely a simple example. In addition, any manner of calculating the confidence based on the acquisition time decay coefficient, the preset category weight reduction coefficient, and the difference weight is applicable to the embodiments of the present disclosure, and details are not described herein again.

In the foregoing embodiments, the confidence of the candidate elevation value is comprehensively evaluated from a plurality of different dimensions by combining the distance weight, the angle weight, the acquisition time decay coefficient, and the preset category weight reduction coefficient, to ensure that the calculated confidence of the candidate elevation value is more reliable.

When plane fitting is performed on the plurality of sampling points, if no plane side deviation occurs, the effective elevation value of the target sampling point may be calculated in the following manner, and then the effective elevation value is optimized using a graph propagation algorithm.

The following first describes the calculation manner for the effective elevation value.

In the embodiments of the present disclosure, for each target sampling point, after each candidate elevation value of the target sampling point and a confidence of each candidate elevation value are obtained, an effective elevation value of the target sampling point may be determined through weighted fusion.

Based on this, an example of operation S34 includes the following operations S331 and S332 (not shown in FIG. 3).

S331: Determine the confidence of each candidate elevation value in the candidate elevation value set of the target sampling point based on the reference map data and each point cloud recognition result.

A manner of calculating the confidence of each candidate elevation value based on the reference map data and each point cloud recognition result is shown in FIG. 7. For details, refer to the foregoing embodiment, and repeated parts are not described again.

S332: Perform weighted fusion on each candidate elevation value based on the confidence of each candidate elevation value, to obtain the effective elevation value of the target sampling point.

In the embodiments of the present disclosure, each target sampling point may correspond to a plurality of candidate elevation values. The plurality of candidate elevation values corresponding to each target sampling point may be fused through weighted fusion, to obtain an effective elevation value, that is, the effective elevation value in the embodiments of the present disclosure. The effective elevation value is a unique value.

For example, an effective elevation value z may be obtained by performing weighted fusion based on the foregoing confidence. A calculation formula for the effective elevation value is as follows:

$$Z = \sum(W_{pi} * z_i) / \sum W_{pi} \qquad \text{(Formula 5)}$$

For a target sampling point, $z_i$ represents an $i^{th}$ candidate elevation value of the target sampling point, and $W_{pi}$ is a confidence of $z_i$.

An example of S322 may be: using a ratio of a sum of products of the candidate elevation values of the target sampling point and the corresponding confidences to a sum of the confidences corresponding to the candidate elevation values as the effective elevation value of the target sampling point.

In the foregoing embodiments, weighted fusion is performed on the candidate elevation values with reference to the confidences, to obtain the effective elevation value of the target sampling point. The elevation value obtained in this manner is obtained by processing candidate elevation values acquired at different time, that is, determined based on the point cloud recognition result. The elevation value is irrelevant to a GPS and the like, and is not affected by the positioning precision of the GPS, the precision of the road network, and the like that are listed above. This helps improve accuracy of elevation information processing.

In the embodiments of the present disclosure, after the effective elevation value of the target sampling point is obtained, the effective elevation value of the target sampling point may be further optimized using the graph propagation algorithm. This part of content is described in detail in the following operation S35, and details are not described herein again.

In addition, if point cloud data of a local part of the lane is missing (that is, there is no point cloud recognition result for the local part) but there are point cloud recognition results before and after the local part, linear interpolation may be performed on the missing local part, to compensate for the missing point cloud data of the local part and smooth the result.

An example is as follows.

If a quantity of target sampling points on any lane in the target region is less than a preset quantity threshold, a first target interpolation point to be interpolated on the any lane is determined. There may be one or more first target interpolation points. Further, the following operation is performed for each first target interpolation point:

performing linear interpolation on the first target interpolation point based on effective elevation values of target sampling points on two sides of the first target interpolation point in the longitudinal point of the lane, to obtain a first interpolated elevation value as an effective elevation value of the first target interpolation point.

The preset quantity threshold may be flexibly set according to an actual requirement, or may be set with reference to the foregoing sampling distance during sampling. This is not specifically limited in this specification.

If an actual quantity of target sampling points on one or more lanes in the target region is less than the preset quantity threshold due to missing of point cloud data, a first target interpolation point, that is, a point whose effective elevation value is to be calculated through linear interpolation, may be selected from the lane based on the foregoing set sampling distance and the like.

Further, for each first target interpolation point, target sampling points having effective elevation values (that is, target sampling points before and after the first target interpolation point along a longitudinal direction of the road on which the lane is located) exist on two sides of the first target interpolation point. Therefore, an effective elevation value of the first target interpolation point may be calculated based on effective elevation values of the target sampling points at the two sides of the first target interpolation point, to implement linear interpolation.

In the embodiments of the present disclosure, an exemplary calculation formula for the effective elevation value of the first target interpolation point is as follows:

$$z = (z_j(\mathrm{m} - \mathrm{i}) + z_i(\mathrm{j} - \mathrm{m}))/(\mathrm{j} - \mathrm{i}) \qquad (\text{Formula 6})$$

m is an index number of an interpolation point to be interpolated, i (on a left side of m) and j (on a right side of m) are index numbers of target sampling points on two sides of the interpolation point. In the embodiments of the present disclosure, the index number represents which sampling point on the road the point is.

In other words, the effective elevation value of the first target interpolation point is determined with reference to the effective elevation value of the target sampling point and index numbers of the interpolation point and the target sampling point.

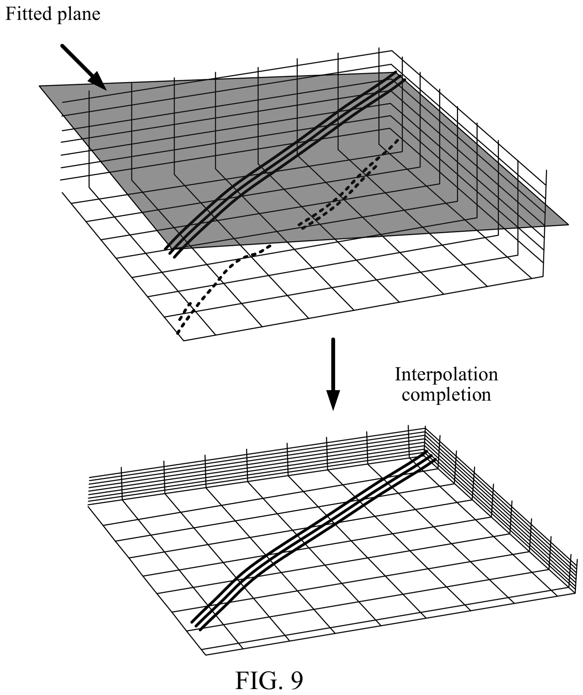

FIG. 9 is a schematic diagram of an interpolation completion process according to the embodiments of the present disclosure. After the fitted plane is obtained, interpolation completion may be further performed through linear interpolation listed above. An interpolation completion result is shown in FIG. 9.

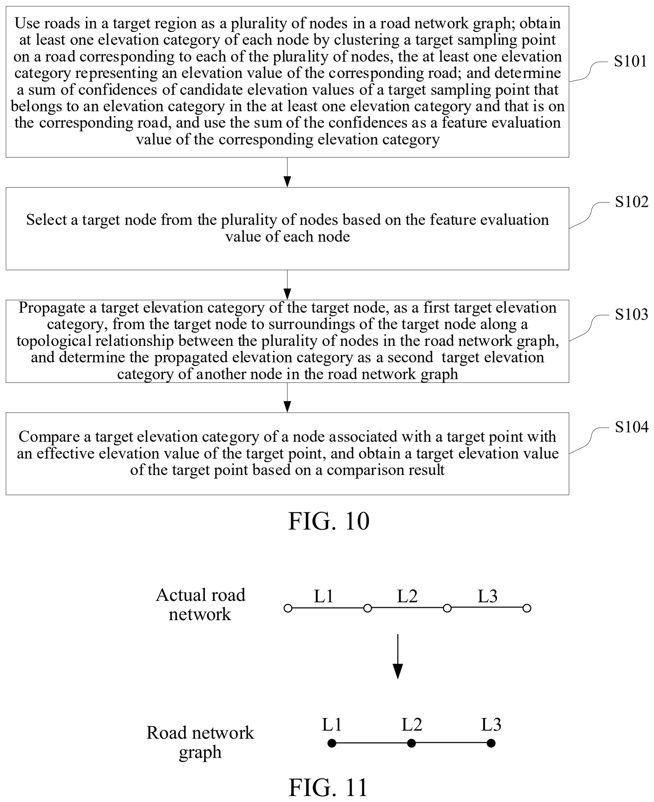

Based on the foregoing, an effective elevation value of each first target interpolation point may be further optimized based on a topological relationship between roads in the target region, to obtain a target elevation value of each first target interpolation point. For a specific optimization process, refer to the following related part of FIG. 10, and repeated parts are not described again.

For example, when surface fitting is degraded to line fitting, a non-target fitted straight line having a side deviation may be flattened through linear interpolation. An example is as follows.

First, for a non-target fitted straight line in the fitted straight line result, a second target interpolation point on the non-target fitted straight line is determined.

Specifically, the second target interpolation point, that is, a point whose effective elevation value is to be calculated through linear interpolation, may be selected from the non-target fitted straight line based on the foregoing set sampling distance and the like.

Further, the following operation is performed for each second target interpolation point: performing linear interpolation on the second target interpolation point based on effective elevation values of target sampling points on two sides of the second target interpolation point, to obtain a second interpolated elevation value as an effective elevation value of the second target interpolation point.

The target sampling points on the two sides of the second target interpolation point are specifically target sampling points on target fitted curves on two sides of the non-target fitted straight line. In other words, linear interpolation may be performed on a part having a side deviation based on an effective fitting result in which no side deviation occurs.

In the embodiments of the present disclosure, a manner for calculating the effective elevation value of the second target interpolation point may be the same as the foregoing listed manner for calculating the effective elevation value of the first target interpolation point. Alternatively, for calculation of the effective elevation value of the second target interpolation point, refer to Formula 6, and repeated parts are not described again.

Based on the foregoing, an effective elevation value of each second target interpolation point may be further optimized based on the topological relationship between the roads in the target region, to obtain a target elevation value of each second target interpolation point. For a specific optimization process, refer to the following related part of FIG. 10, and repeated parts are not described again.

In the foregoing embodiments, for a fitted straight line having a side deviation, impact may be further reduced through linear interpolation or in another manner, to improve the accuracy of elevation information processing.

S35: Optimize the effective elevation value of each target sampling point based on the topological relationship between the roads in the target region, to obtain the target elevation value of each target sampling point.

In the embodiments of the present disclosure, the topological relationship between the roads is a connectivity relationship between the roads.

In the embodiments of the present disclosure, the target sampling point, the first target interpolation point, or the second target interpolation point listed above may be collectively referred to as a target point. For any target point, as described above, an effective elevation value of each target point is obtained, but it cannot mean that this elevation value is correct. This is because in a multilayer road scenario, an upper-layer road has more better point cloud recognition results due to a good pavement condition and light, while a lower layer has a large quantity of missing recognition cases. When resampling is performed according to the foregoing method, a sample deviation causes RANSAC to tend to a layer at which many sampling points are fitted, and consequently, an obtained effective elevation value may be abnormal and incorrect. Therefore, a plurality of layers and whether a specific road belongs to an upper layer or a lower layer need to be distinguished. To resolve the problem, in the embodiments of the present disclosure, the candidate elevation values are clustered to obtain a clustering result including multiple clusters corresponding to different layers of the target region. The effective elevation value of the target points are optimized based on the clustering result and with reference to the topological relationship between the roads in the target region. In other words, the elevation value is optimized using the graph propagation algorithm, to obtain a target elevation value of the target point.

FIG. 10 is a flowchart of optimization based on a graph propagation algorithm according to the embodiments of the present disclosure. A schematic diagram of an exemplary method for optimizing an elevation value based on a graph propagation algorithm includes the following operations S101 to S104.

S101: Use the roads in the target region as a plurality of nodes in a road network graph. Each node corresponds to at least one elevation category and a feature evaluation value corresponding to each elevation category. The elevation category is obtained by clustering target sampling points on a road corresponding to the node, and represents an elevation value of the road. The feature evaluation value is a sum of confidences of candidate elevation values of a target sampling point belonging to an elevation category on the road. In operation S101, the method may further include: obtaining the at least one elevation category of each node by clustering a target sampling point on a road corresponding to each of the plurality of nodes, the at least one elevation category representing an elevation value of the corresponding road; and determining a sum of confidences of candidate elevation values of a target sampling point that belongs to an elevation category in the at least one elevation category and that is on the corresponding road, and using the sum of the confidences as a feature evaluation value of the elevation category.

In the embodiments of the present disclosure, to optimize effects of distinguishing between upper and lower road layers on the whole, the graph propagation algorithm is introduced. In the graph propagation algorithm, a road is used as a node, and the node has a feature score (representing a weight of the node) and a label. The label may be an elevation category in this specification, and the feature score is a feature evaluation value corresponding to the elevation category.

FIG. 11 is a schematic diagram of a road network graph according to the embodiments of the present disclosure. For example, an actual road network in the target region includes three roads: L1, L2, and L3 in the actual road network. In this case, a road network graph generated based on the actual road network includes three nodes, for example, nodes L1, L2, and L3 in the road network graph in FIG. 11. There are edges between nodes corresponding to connected roads. As shown in FIG. 11, the node L1 is connected to the node L2, and the node L2 is connected to the node L3. In other words, the road L1 is connected to the road L2, and the road L2 is connected to the road L3.

The actual road network and the road network graph in FIG. 11 are merely simple examples. Actually, a road network in the real world may be more complex, and a corresponding road network graph is also more complex. Details are not described herein again.

In the embodiments of the present disclosure, the effective elevation value may be optimized using the graph propagation algorithm. The road in the target region is used as a node in the road network graph, that is, each road in the target region may be used as a node. Because one road may be a single-layer road, or may be a road in a plurality of layers of roads, each node corresponds to at least one elevation category. For example, a node belonging to a single-layer road corresponds to only one elevation category, and a node belonging to a plurality of layers of roads may correspond to a plurality of elevation categories. Further, each elevation category corresponding to a node corresponds to a feature evaluation value, and the feature evaluation value is a sum of confidences of candidate elevation values of a target sampling point belonging to the elevation category on a road corresponding to the node. The road in the target region may be obtained from the reference map data and/or determined based on the point cloud recognition result.

For example, for a road (node), there are three elevation categories corresponding to the road, which are a category A (5 meters), a category B (10 meters), and a category C (15 meters). The category A corresponds to five target sampling points on the road, the category B corresponds to 10 target sampling points on the road, and the category C corresponds to 10 target sampling points on the road. If a sum of confidences of the five target sampling points corresponding to the category A is 10, a feature evaluation value corresponding to the category A is 10, that is, a feature score is 10. Similarly, a feature evaluation value corresponding to the category B is 11, that is, a score is 11; and a feature evaluation value corresponding to the category C is 9, that is, a score is 9.

In the foregoing case, the scores corresponding to the three categories A, B, and C are approximately the same, and it is difficult to determine one of the three categories as an accurate elevation value of the road. In this case, optimization may be performed using the graph propagation algorithm.

Before optimization, the target sampling points on the road in the target region are first clustered, to determine, through clustering, at least one elevation category corresponding to each road (each node). An example is as follows.

First, the candidate elevation values are clustered based on the candidate elevation value set of each target sampling point, to obtain at least one cluster. A difference between elevation values of cluster centers of different clusters is greater than a preset elevation threshold. For example, the candidate elevation values of the one or more target sampling points are clustered based on the candidate elevation value set of each target sampling point, to obtain the at least one cluster. A difference between elevation values of cluster centers of different clusters in the at least one cluster is greater than the preset elevation threshold. The preset elevation threshold is a specified height threshold, may be flexibly set according to an actual situation or requirement, and is usually a positive number, for example, 4.5 meters.

In the embodiments of the present disclosure, there are a plurality of manners for clustering the candidate elevation values, for example, K-means and fuzzy C-means clustering (FCM). This is not specifically limited in this specification.

A K-means clustering manner is used as an example. The candidate elevation values in the candidate elevation value set of each target sampling point may be clustered according to a K-means clustering method. For example, k candidate elevation values are first randomly selected from a candidate elevation value set corresponding to a target sampling point as k cluster centers of k clusters. Then, based on distances between each candidate elevation value in the candidate elevation value set and the k cluster centers, the candidate elevation value is classified into a cluster whose cluster center is closest to the candidate elevation value. Next, a cluster center of each cluster is updated. For example, an average value of all candidate elevation values in each cluster is used as a new cluster center of the cluster. The foregoing process is repeated until a termination condition is satisfied, for example, a change between the updated cluster center and the cluster center before update is less than a threshold, or a quantity of iterations is reached. In the embodiments of the present disclosure, four clusters may be first determined. Then, the clusters may be merged, so that a quantity of clusters starts to decrease, until at least one cluster is obtained. A difference between z values (candidate elevation values) of cluster centers of the at least one cluster is greater than the preset elevation threshold. The obtained at least one cluster is a classification of the candidate elevation value of the road, that is, an elevation category in this specification.

Further, the following operations are performed for each node: determining an elevation value of a cluster center corresponding to each target sampling point associated with the node, and using the determined elevation value as the elevation value represented by the elevation category corresponding to the node.

In the embodiments of the present disclosure, the road is used as the node. For a road, a quantity of clusters obtained by clustering a target sampling point on the road indicates a quantity of elevation categories of the road, that is, a quantity of layers to which the road may belong. Each elevation category represents one layer, and an elevation value represented by the elevation category is an elevation value of the layer.

As listed above, there are three elevation categories corresponding to a road, which are the category A, the category B, and the category C, that is, the road may be a three-layer road.

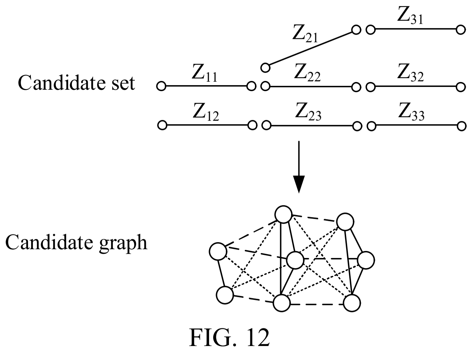

FIG. 12 is a schematic diagram of an elevation category candidate set of a road and a corresponding candidate graph according to the embodiments of the present disclosure.

FIG. 12 indicates that the road L1 may be a two-layer road, and corresponds to two elevation categories respectively representing elevation values $Z_{11}$ and $Z_{12}$. The road L2 may be a three-layer road, and corresponds to three elevation categories respectively representing elevation values $Z_{21}$, $Z_{22}$, and $Z_{23}$. The road L3 may be a three-layer road, and corresponds to three elevation categories respectively representing elevation values $Z_{31}$, $Z_{32}$, and $Z_{33}$. A candidate graph generated based on the foregoing elevation categories is shown in FIG. 12. The candidate graph describes the elevation values of the road and a possible corresponding connection relationship.

In the foregoing embodiments, a quantity of layers corresponding to each road may be determined through clustering. Further, the effective elevation values of the target points previously determined based on the point cloud recognition results may be verified with reference to the topological relationship between the roads. If there is a problem, calibration may be further performed. A specific example is described in the following S102 and S103.

S102: Select a target node from the plurality of nodes based on the feature evaluation value of each node.

In the embodiments of the present disclosure, when the target node is selected, a node corresponding to a road with low layer ambiguity may be preferentially selected, which is usually a single-layer road.

Each node may correspond to one score, or may correspond to more scores (because there is a stratification situation), and each elevation category obtained through K-means clustering corresponds to one score. Selecting the target node based on the score corresponding to each node includes but is not limited to at least one of the following selection manners.

Selection manner 1: Use a node having only one feature evaluation value in the plurality of nodes as the target node.

To be specific, a node having only one score is selected, and a road corresponding to the node having the only one score is a single-layer road.

Selection manner 2: Use a node whose ratio of one corresponding feature evaluation value to another feature evaluation value is greater than a preset ratio threshold in the plurality of nodes as the target node.

In the embodiments of the present disclosure, the preset ratio threshold may be flexibly set according to an actual situation or requirement, and the value is usually a positive number greater than 1, for example, 5, 10, 11, or 15.

For example, if a node corresponds to a plurality of scores, but in the plurality of scores, a ratio of a score of an elevation category to a score of another elevation category is greater than the preset ratio threshold, the node may be used as the target node.

For example, a node whose score of an elevation category is higher than a score of another elevation category by more than ten times is selected as the target node. Such a node has low road layer ambiguity, and an upper or lower layer can be basically determined.

In the embodiments of the present disclosure, one target node may be selected, or a plurality of target nodes may be selected. When the target node is selected, any one of the selection manner 1 and the selection manner 2 may be used, or the two selection manners may be combined for selection. When the target node is selected by combining the two selection manners, selection may be preferentially performed in the selection manner 1. If the target node is not selected in the selection manner 1, or selected target nodes are inadequate, selection is further performed in the selection manner 2.

S103: Propagate a target elevation category of the target node, as a first target elevation category, from the target node to surroundings of the target node along a topological relationship between the plurality of nodes in the road network graph, and determine the propagated elevation category as a second target elevation category of another node in the road network graph based on a propagation result.

S104: Compare a target elevation category of a node associated with the target point with the effective elevation value of the target point, and obtain the target elevation value of the target point based on a comparison result.

Selecting, in the selection manner 1, a node corresponding to a single-layer road as the target node is used as an example below. After the target node is selected, an elevation category of the target node is diffused from the target node to the surroundings along the topological relationship between the nodes in the road network graph. A road corresponding to the target node is marked with a good label, and propagation is performed based on the connectivity relationship (topological relationship) between the roads. For a road, an elevation category corresponding to the road propagated from a good label may be used as reference when a layer of the current road is difficult to distinguish, and is denoted as a target elevation category of a node corresponding to the current road. Therefore, overall elevation precision is improved using an advantage of an overall perspective of the topological relationship between the roads in the target region.

For example, the node corresponding to the three-layer road listed above is L5, and the selected target node is L4 (single-layer). When propagation is performed based on the connectivity relationship between the roads, L4 is connected to L5, and an elevation category of L4 may be propagated to L5. Based on this, an elevation category with a minimum difference from the elevation category of L4 is selected from the three elevation categories (the category A - 5 meters, the category B - 10 meters, and the category C - 15 meters) corresponding to L5 as a target elevation category of L5. If L4 is 10 meters, it may be determined that L5 is 10 meters.

Similarly, when the target node is selected in the selection manner 2, a similar principle is used, and repeated parts are not described again.

In the embodiments of the present disclosure, when the target elevation value of the target point is obtained based on the comparison result, an example is as follows.

If the comparison result is within a preset difference range, the effective elevation value of the target point is used as the target elevation value of the target point; or if the comparison result is beyond a preset difference range, an elevation value represented by the target elevation category of the node associated with the target point is used as the target elevation value of the target point.

For example, for a target sampling point, an effective elevation value of the target sampling point obtained through calculation is 10 meters, and an elevation value represented by a target elevation category determined through graph propagation is also 10 meters. In this case, it may be determined that a target elevation value of the target sampling point is 10 meters.

For a target sampling point, an effective elevation value of the target sampling point obtained through calculation is 10 meters, and an elevation value represented by a target elevation category determined through graph propagation is 15 meters. In this case, it may be determined that a target elevation value of the target sampling point is 15 meters.

In the foregoing embodiments, a graph propagation stage may be understood as a post-processing stage, and is configured to verify whether the calculated effective elevation value is accurate. When it is found that the calculated effective elevation value may be abnormal and incorrect, the effective elevation value may be corrected using the graph propagation algorithm, to improve the accuracy of elevation information processing.

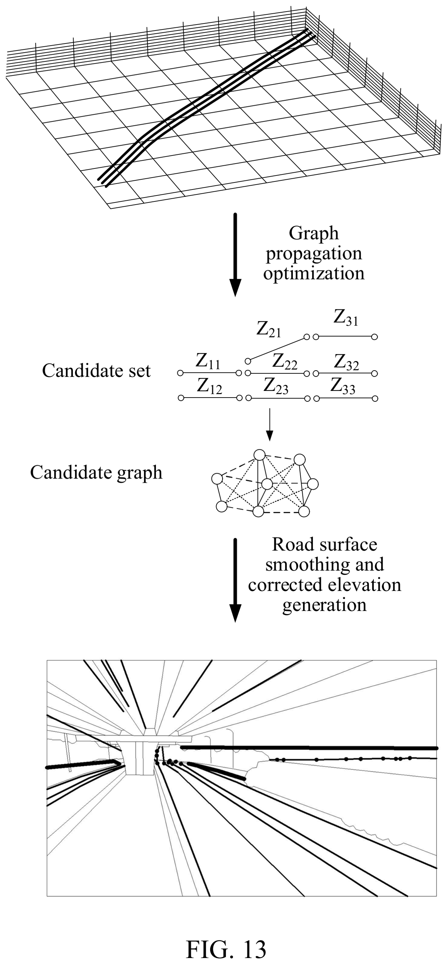

FIG. 13 is a schematic diagram of a graph propagation optimization process according to the embodiments of the present disclosure. In the embodiments of the present disclosure, the obtained effective elevation value of each target point may be verified through graph propagation listed above. If a problem is found, the effective elevation value may be corrected in time based on graph propagation, to achieve effects of road surface smoothing and elevation correction.

In the embodiments of the present disclosure, after equidistant resampling is performed on the lane data of the road, various point cloud recognition results are box-selected, which has a high requirement on the precision of the road network. In some scenarios in which mapping precision of the road network is inadequate, there is still a problem of inadequate automated processing precision. To eliminate dependence on the precision and correctness of the road network, it may be considered to automatically construct a road surface model directly based on the point cloud recognition result, and perform matching between the road surface model and the lane data of the current road, to improve precision of the elevation data when dealing with a complex road surface condition.

The foregoing describes processing of the elevation value of the road. In addition, the target region may further include an intersection, and in a scenario in which fitting cannot be performed, such as an intersection range (there is no association relationship between the road and the lane) and deficiency of samples, the lane data of the road may be automatically processed using a hole fitting method.

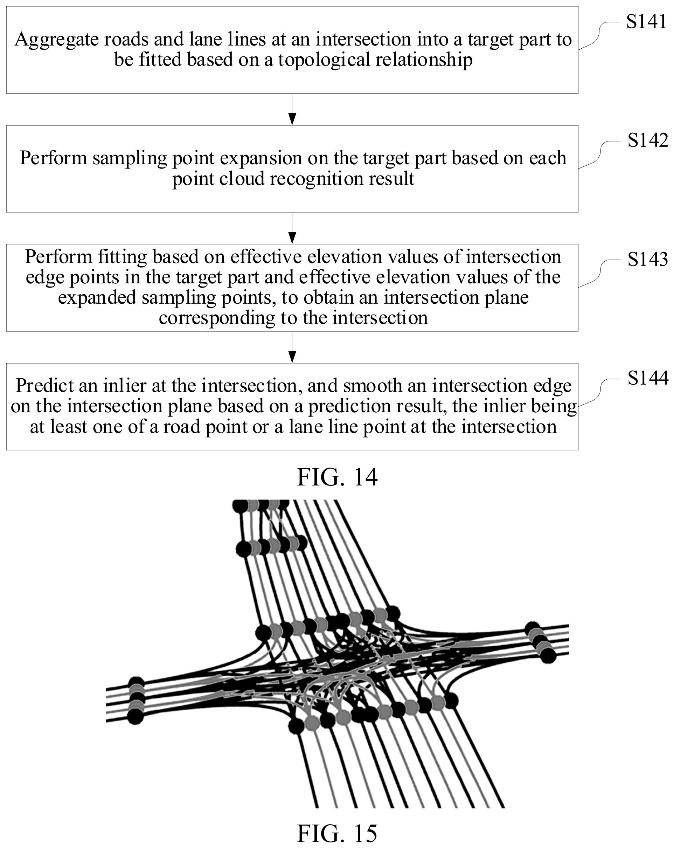

FIG. 14 is a flowchart of a hole filling method according to the embodiments of the present disclosure, including the following operations S141 to S144.

S141: Aggregate a road and a lane line at the intersection into a to-be-fitted part based on a topological relationship.

S142: Perform sampling point expansion on the to-be-fitted part based on each point cloud recognition result.

S143: Perform fitting based on an effective elevation value of an intersection edge point in the to-be-fitted part and an effective elevation value of an expanded sampling point, to obtain an intersection plane corresponding to the intersection.

S144: Predict an inlier at the intersection, and smooth an intersection edge on the intersection plane based on a prediction result, the inlier being at least one of a road point and a lane line point at the intersection.

For the intersection, in general, a plane is fitted based on edge points around the intersection, to fill the hole to a single plane. Then, elevation values of all elements (whether roads or lanes) at the intersection are copied from the plane.

As shown in FIG. 14, the roads and the lanes at the intersection are first clustered based on the topological relationship, to form to-be-fitted parts (denoted as carto). Then, elevation values (that is, the effective elevation values described above) of intersection edge points in the carto are well fitted. Based on this, some sampling points (for example, digital elevation model (DEM) elevation data or trajectory points) are additionally expanded based on the foregoing obtained point cloud recognition results. After a plane is fitted based on these intersection edge points and the expanded sampling points, an elevation value of the inlier (the road point or the lane line point at the intersection) is predicted based on the RANSAC algorithm, then a fitting result is optimized based on the prediction result, and the intersection edge on the intersection plane is further smoothed.

FIG. 15 is a schematic diagram of hole filling effects of an intersection according to the embodiments of the present disclosure. Black points and lines represent lane boundaries, and grey points and lines represent centerlines of the lane boundaries. The lane centerline is a centerline determined based on the left and right lane boundaries. In the embodiments of the present disclosure, the lane centerline may be used in a scenario such as autonomous driving. With reference to the lane centerline, a vehicle may keep traveling at a location of an exact center of the lane.

In the embodiments of the present disclosure, the intersection is a special scenario. Because there is no binding relationship between the road and the lane boundary at the intersection, the graph propagation algorithm described above does not need to perform processing for the intersection, and the intersection is transparently transmitted.

In the foregoing embodiments, processing may be performed for a special scenario such as the intersection through hole filling, to enrich and improve elevation information processing.

In conclusion, according to the method for automatically processing an elevation of a lane on a road based on a cloud point recognition result provided in the present disclosure, quality of elevation data in a current high-precision map can be effectively improved, and a requirement of a customer for an autonomous driving simulation environment can be met. In addition, in a daily data operation production stage, problems of high geometric difficulty and low efficiency in mapping in a three-dimensional mode are greatly alleviated, and efficiency and accuracy of various data production operations are improved.

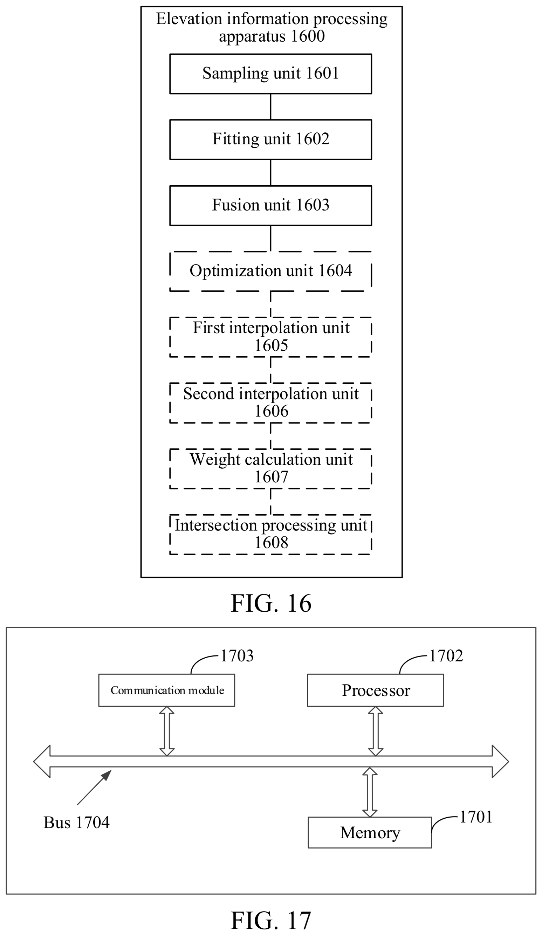

Based on a same inventive concept, the embodiments of the present disclosure further provide an elevation information processing apparatus. FIG. 16 is a schematic diagram of a structure of an elevation information processing apparatus 1600. The apparatus 1600 may include:

a sampling point 1601, configured to sample lane data of a road in a target region to obtain a plurality of sampling points;

a fitting unit 1602, configured to: determine, from a plurality of point cloud recognition results each obtained by recognizing a point cloud of the target region, a plurality of elevation values for each sampling point of the plurality of sampling points, as candidate elevation values of each sampling point, in which the candidate elevation values of each sampling point form a candidate elevation value set of each sampling point; and fit the candidate elevation values of the plurality of sampling points to obtain a fitting result, and determine one or more target sampling points in the plurality of sampling points based on the fitting result; and

a fusion unit 1603, configured to, for the candidate elevation value set of each target sampling point in the one or more target sampling points, determining a confidence of each candidate elevation value in the candidate elevation value set of each target sampling point, and determining an effective elevation value of each target sampling point based on the confidence of each candidate elevation value.

The processing apparatus 1600 may further include an optimization unit 1604, configured to optimize the effective elevation value of each target sampling point based on a topological relationship between roads in the target region, to obtain a target elevation value of each target sampling point.

For example, the fusion unit 1603 is specifically configured to:

determine the confidence of each candidate elevation value in the candidate elevation value set of the target sampling point based on reference map data and each of the plurality of point cloud recognition results; and

perform weighted fusion on each candidate elevation value based on the confidence of each candidate elevation value, to obtain the effective elevation value of the target sampling point.

For example, the apparatus further includes:

a first interpolation unit 1605, configured to: determine, if a quantity of target sampling points on a lane in the target region in the one or more target sampling points is less than a preset quantity threshold, a first target interpolation point to be interpolated on the lane; and

perform linear interpolation on the first target interpolation point based on effective elevation values of target sampling points on two sides of the first target interpolation point in the target sampling points on the lane, to obtain a first interpolated elevation value as an effective elevation value of the first target interpolation point.

In this case, the optimization unit 1604 is further configured to:
optimize an effective elevation value of each first target interpolation point based on the topological relationship between the roads in the target region, to obtain a target elevation value of each first target interpolation point.

For example, the fitting unit 1602 is specifically configured to:

perform plane fitting on the plurality of sampling points based on the plurality of elevation values of each of the plurality of sampling points, to obtain a fitted plane corresponding to the target region; and

use a sampling point on the fitted plane in the plurality of sampling points as a target sampling point if an angle between the fitted plane and a standard normal vector is not less than a first preset angle threshold, the standard normal vector being a normal vector perpendicular to a horizontal ground.

For example, the fitting unit 1602 is further configured to:

convert longitude and latitude information of each sampling point into a linear reference distance if the angle between the fitted plane and the standard normal vector is less than the first preset angle threshold, the linear reference distance indicating a distance between each sampling point and a starting point of a lane line to which each sampling point belongs, the standard normal vector being a normal vector perpendicular to the horizontal ground, and the lane line being a segment of lane line in the target region;

perform line fitting on the plurality of sampling points based on the linear reference distances of the plurality of sampling points, to obtain a fitted straight line result of the target region; and

use a sampling point that is in the plurality of sampling points and that is on a target fitted straight line in the fitted straight line result as a target sampling point, the target fitted straight line being a fitted straight line whose angle with the standard normal vector is not less than a second preset angle threshold.

For example, the apparatus further includes:

a second interpolation unit 1606, configured to: determine, for a non-target fitted straight line in the fitted straight line result, a second target interpolation point on the non-target fitted straight line;

determine target sampling points on target fitted straight lines adjacent to the non-target fitted straight line on two sides of the second target interpolation point along a longitudinal direction of the road in the target region; and

perform linear interpolation on the second target interpolation point based on effective elevation values of the target sampling points on the two sides of the second target interpolation point, to obtain a second interpolated elevation value as an effective elevation value of the second target interpolation point.

In this case, the optimization unit 1604 is further configured to:
optimize an effective elevation value of each second target interpolation point based on the topological relationship between the roads in the target region, to obtain a target elevation value of each second target to-be-interpolated point.
For example, the optimization unit 1604 is specifically configured to:

determine a target point having an effective elevation value, the target point including at least one of a target sampling point, a first target interpolation point, and a second target to-be-interpolated point; and

use the roads in the target region as a plurality of nodes in a road network graph;

determine at least one elevation category of each node by clustering a target sampling point on a road corresponding to each of the plurality of nodes, the at least one elevation category representing an elevation value of the corresponding road;

determine a sum of confidences of candidate elevation values of a target sampling point that belongs to an elevation category in the at least one elevation category and that is on the corresponding road, and use the sum of the confidences as a feature evaluation value of the elevation category;

select a target node from the plurality of nodes based on the feature evaluation value of each node;

propagate the elevation category of the target node, as a first target elevation category, from the target node to surroundings of the target node along a topological relationship between the plurality of nodes in the road network graph, and determine the propagated elevation category as a second target elevation category of another node in the road network graph based on a propagation result; and

compare a target elevation category of a node associated with the target point with the effective elevation value of the target point, and obtain the target elevation value of the target point based on a comparison result.

For example, the optimization unit 1604 is specifically configured to select the target node in at least one of the following manners:

using a node having only one feature evaluation value in the plurality of nodes as the target node; or

using a node whose ratio of one feature evaluation value to another feature evaluation value is greater than a preset ratio threshold in the plurality of nodes as the target node.

For example, the optimization unit 1604 is further configured to obtain an elevation category corresponding to each node in the following manner:

clustering the candidate elevation values of the one or more target sampling points based on the candidate elevation value set of each target sampling point, to obtain at least one cluster, a difference between elevation values of cluster centers of different clusters in the at least one cluster being greater than a preset elevation threshold; and

performing the following operations for each node: determining an elevation value of a cluster center corresponding to each target sampling point associated with each node, and using the determined elevation value as the elevation value represented by the elevation category corresponding to each node.

For example, the optimization unit 1604 is specifically configured to:

compare an obtained elevation value corresponding to the target elevation category with an effective elevation value corresponding to the target point on the fitted plane; and

use the effective elevation value of the target point as the target elevation value of the target point if the comparison result is within a preset difference range; or

use an elevation value represented by the target elevation category of each node associated with the target point as the target elevation value of the target point if the comparison result is beyond the preset difference range.

For example, the apparatus further includes:
a weight calculation unit 1607, configured to determine the confidence of each candidate elevation value in the following manner:

determining, according to a point cloud recognition result associated with a candidate elevation value, a difference weight of the candidate elevation value based on a difference between a segment of point cloud lane line formed by the target sampling point and a next adjacent target sampling point and a segment of map lane line formed by corresponding points in the reference map data in a point cloud recognition result associated with the candidate elevation value;

determining an acquisition time decay coefficient of the candidate elevation value based on acquisition time of the point cloud recognition result associated with the candidate elevation value;

determining, based on a recognized category of the target sampling point in the point cloud recognition result associated with the candidate elevation value, a preset category weight reduction coefficient corresponding to the recognized category; and

determining the confidence of the candidate elevation value based on the difference weight, the acquisition time decay coefficient, and the preset category weight reduction coefficient.

For example, the difference weight includes at least one of a distance weight and an angle weight.
In this case, the weight calculation unit 1607 is specifically configured to perform at least one of the following operations:

determining the distance weight of the candidate elevation value based on a lateral distance between the segment of point cloud lane line and the segment of map lane line; and

determining the angle weight of the candidate elevation value based on a longitudinal angle between the segment of point cloud lane line and the segment of map lane line.

For example, the difference weight includes the distance weight and the angle weight. In this case, the weight calculation unit 1607 is specifically configured to:

Determine a target parameter, the target parameter being a sum of a product of the distance weight and a first preset model parameter and a product of the angle weight and a second preset model parameter; and

use a product of the acquisition time decay coefficient, the preset category weight reduction coefficient, and the target parameter as the confidence corresponding to the candidate elevation value.

For example, the weight calculation unit 1607 is specifically configured to:

determine the distance weight of the candidate elevation value based on a ratio of a square of the lateral distance to a square of a third preset model parameter; and/or

determine the angle weight of the candidate elevation value based on a ratio of a square of a longitudinal angle to a square of a fourth preset model parameter.

For example, the weight calculation unit 1607 is specifically configured to:
determine the acquisition time decay coefficient based on a difference between the acquisition time of the point cloud recognition result associated with the candidate elevation value and maximum acquisition time, the maximum acquisition time being a maximum value in acquisition time of the plurality of point cloud recognition results.

For example, if the target region includes an intersection, the apparatus further includes:
an intersection processing unit 1608, configured to: aggregate roads and lane lines at the intersection into a target part to be fitted based on a topological relationship; perform sampling point expansion on the target part based on the plurality of point cloud recognition results; perform fitting based on effective elevation values of intersection edge points in the target part and effective elevation values of the expanded sampling points, to obtain an intersection plane of the intersection; and predict an inlier at the intersection, and smooth an intersection edge on the intersection plane based on a prediction result, the inlier being at least one of a road point or a lane line point at the intersection.

The elevation information processing apparatus in the present disclosure is implemented based on the point cloud recognition result. Plane fitting is performed based on the point cloud recognition result, so that a noise point can be effectively removed, and a wanted target sampling point can be obtained. In addition, the candidate elevation values of the sampling points may be obtained from the point cloud recognition result. Based on this, candidate elevation values of a same target sampling point may be fused based on confidences of the candidate elevation values corresponding to the target sampling point, and an effective elevation value is optimized based on the topological relationship between the roads, to obtain a processed target elevation value. The processing process is implemented based on the point cloud recognition result. Compared with a current trajectory-based road network matching method in which a trajectory is used as a main basis, in the present disclosure, elevation precision of road lane data is directly evaluated based on the point cloud recognition result. The point cloud recognition result is not affected by an installation location of a GPS and the like, includes more abundant information than trajectory data, and is more accurate than the trajectory data. Based on this, automatic elevation processing is effectively performed on data such as a road lane using methods such as resampling, plane fitting, and optimization based on the topological relationship, so that the accuracy can be effectively improved.

Based on this, automatic elevation processing is performed on the road lane based on the point cloud recognition result, so that quality of elevation data on a current map can be effectively improved, improving realness of a simulated reality environment in an autonomous driving simulation stage, to provide a simulated environment consistent with a reality environment to an object having a requirement (for example, a driving object).

For ease of description, the foregoing parts fall into modules (or units) based on functions for separate description. Certainly, when the present disclosure is implemented, functions of the modules (or units) can be implemented in one or more pieces of software or hardware.

After the elevation information processing method and apparatus in examples of the present disclosure are described, an electronic device according to another example of the present disclosure is described below.

Persons skilled in the art can understand that various aspects of the present disclosure can be implemented as a system, a method, or a program product. Therefore, the aspects of the present disclosure may be specifically implemented in the following form, that is, a complete hardware implementation, a complete software implementation (including firmware, microcode, and the like), or an implementation that combines hardware and software aspects, which may be collectively referred to herein as a "circuit", "module", or "system".

Based on the same inventive concept as the foregoing method embodiments, the embodiments of the present disclosure further provide an electronic device. In the embodiments, the electronic device may be a server, for example, the server 120 shown in FIG. 1. In this embodiment, a structure of the electronic device may be shown in FIG. 17. The electronic device includes a memory 1701, a communication module 1703, and one or more processors 1702.

The memory 1701 is configured to store a computer program executed by the processor 1702. The memory 1701 may include a program storage region and a data storage region. The program storage region may store an operating system, a program required for running an instant messaging function, and the like. The data storage region may store various instant messaging information, operating instruction sets, and the like.

The memory 1701 may be a volatile memory, for example, a random-access memory (RAM). Alternatively, the memory 1701 may be a non-volatile memory, for example, a read-only memory, a flash memory, a hard disk drive (HDD), or a solid-state drive (SSD). Alternatively, the memory 1701 may be any other medium that can be configured to carry or store a desired computer program in a form of an instruction or a data structure and that can be accessed by a computer, but is not limited thereto. The memory 1701 may be a combination of the foregoing memories.

The processor 1702 may include one or more central processing units (CPUs), or is a digital processing unit or the like. The processor 1702 is configured to implement the foregoing elevation information processing method when invoking the computer program stored in the memory 1701.

The communication module 1703 is configured to communicate with a terminal device and another server.

A specific connecting medium between the memory 1701, the communication module 1703, and the processor 1702 is not limited in the embodiments of the present disclosure. In the embodiments of the present disclosure, the memory 1701 and the processor 1702 are connected through a bus 1704 in FIG. 17. The bus 1704 is described by a thick line in FIG. 17, and connections between other components are merely examples for description, and shall not be construed as a limitation. The bus 1704 may be classified as an address bus, a data bus, a control bus, and the like. For ease of description, only one thick line is for describing the bus in FIG. 17, but this does not mean that there is only one bus or only one type of bus.

The memory 1701 has a computer storage medium stored therein, the computer storage medium has computer-executable instructions stored therein, and the computer-executable instructions are configured for implementing the elevation information processing method in the embodiments of the present disclosure. The processor 1702 is configured to perform the foregoing elevation information processing method, as shown in FIG. 3.

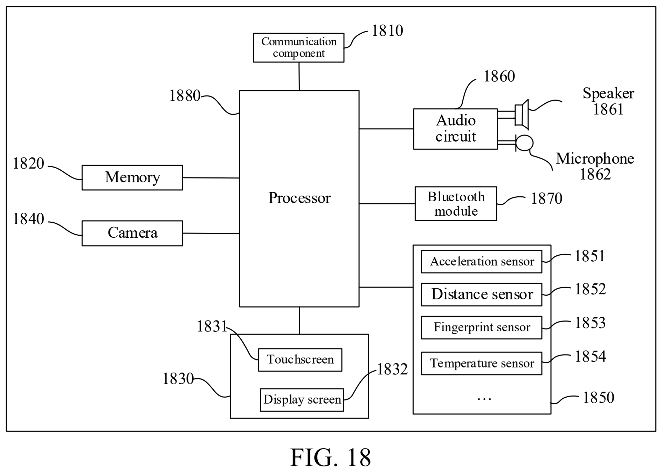

In another embodiment, the electronic device may alternatively be another electronic device, for example, the terminal device 110 shown in FIG. 1. In this embodiment, a structure of the electronic device may be shown in FIG. 18, and includes a communication component 1810, a memory 1820, a display unit 1830, a camera 1840, a sensor 1850, an audio circuit 1860, a Bluetooth module 1870, a processor 1880, and another component.

The communication component 1810 is configured to communicate with a server. In some embodiments, a circuit wireless fidelity (Wi-Fi) module may be included. The Wi-Fi module is a short-distance wireless transmission technology. The electronic device may help a user transmit and receive information via the Wi-Fi module.

The memory 1820 may be configured to store a software program and data. The processor 1880 executes various functions and data processing of the terminal device 110 by running the software program or data stored in the memory 1820. The memory 1820 may include a high-speed random-access memory and a non-volatile memory, such as at least one magnetic disk storage device, a flash memory device, or another volatile solid-state storage device. The memory 1820 has an operating system stored therein that enables the terminal device 110 to run. In the present disclosure, the memory 1820 may store the operating system and various applications, and may further store a computer program for performing the elevation information processing method in the embodiments of the present disclosure.

The display unit 1830 may be further configured to display information inputted by the user, information provided to the user, and a graphical user interface (GUI) of various menus of the terminal device 110. Specifically, the display unit 1830 may include a display screen 1832 arranged on a front surface of the terminal device 110. The display screen 1832 may be configured in a form of a liquid crystal display, an organic light-emitting diode, and the like. The display unit 1830 may be configured to display a related interface of map software in the embodiments of the present application, and the like.

The display unit 1830 may be further configured to receive inputted digital or character information, and generate a signal input related to a user setting and function control of the terminal device 110. Specifically, the display unit 1830 may include a touchscreen 1831 arranged on the front surface of the terminal device 110, which can collect touch operations of the user on or near the touchscreen, such as tapping a button and dragging a scroll box.

The touchscreen 1831 may cover the display screen 1832, or the touchscreen 1831 and the display screen 1832 may be integrated to implement an input function and an output function of the terminal device 110, which may be referred to as a touch display screen after integration. In the present disclosure, the display unit 1830 may display the application and a corresponding operation.

The camera 1840 may be configured to capture a static image, and the user may post, through the application, the image captured by the camera 1840. There may be one or more cameras 1840. An optical image of an object is generated via a lens, and is projected to a photosensitive element. The photosensitive element may be a charge coupled device (CCD) or a complementary metal-oxide-semiconductor (CMOS) phototransistor. The photosensitive element converts an optical signal into an electrical signal, and then transfers the electrical signal to the processor 1880 for conversion into a digital image signal.

The terminal device may further include at least one sensor 1850, for example, an acceleration sensor 1851, a distance sensor 1852, a fingerprint sensor 1853, and a temperature sensor 1854. The terminal device may be further configured with other sensors such as a gyroscope, a barometer, a hygrometer, a thermometer, an infrared sensor, an optical sensor, and a motion sensor.

The audio circuit 1860, a speaker 1861, and a microphone 1862 may provide audio interfaces between the user and the terminal device 110. The audio circuit 1860 may convert received audio data into an electrical signal, and transmit the electrical signal to the speaker 1861. The speaker 1861 converts the electrical signal into a sound signal, and outputs the sound signal. The terminal device 110 may be further configured with a volume button, configured to adjust a volume of the sound signal. In addition, the microphone 1862 converts a collected sound signal into an electrical signal, and the audio circuit 1860 receives the electrical signal, converts the electrical signal into audio data, and then outputs the audio data to the communication component 1810 for transmission to, for example, another terminal device 110, or outputs the audio data to the memory 1820 for further processing.

The Bluetooth module 1870 is configured to perform information exchange with another Bluetooth device having a Bluetooth module using a Bluetooth protocol. For example, the terminal device may establish, via the Bluetooth module 1870, a Bluetooth connection to a wearable electronic device (for example, a smartwatch) also having a Bluetooth module, to perform data exchange.

The processor 1880 is a control center of the terminal device that connects various parts of the entire terminal through various interfaces and lines, and performs various functions and data processing of the terminal device by running or executing the software program stored in the memory 1820 and invoking the data stored in the memory 1820. In some embodiments, the processor 1880 may include one or more processing units. The processor 1880 may integrate an application processor and a baseband processor. The application processor mainly processes the operating system, a user interface, an application, and the like. The baseband processor mainly processes wireless communication. Alternatively, the baseband processor may not be integrated into the processor 1880. In the present disclosure, the processor 1880 may run the operating system, the application, user interface display, and a touch response, and perform the elevation information processing method in the embodiments of the present disclosure. In addition, the processor 1880 is coupled to the display unit 1830.

In some possible embodiments, various aspects of the elevation information processing method provided in the present disclosure may alternatively be implemented in a form of a program product including a computer program. When the program product is run on the electronic device, the computer program is configured for enabling the electronic device to perform the operations in the elevation information processing method described in this specification according to various examples of the present disclosure. For example, the electronic device may perform the operations shown in FIG. 3.

The program product may use any combination of one or more readable media. The readable medium may be a readable signal medium or a readable storage medium. The readable storage medium may be, for example, but is not limited to, an electric, magnetic, optical, electromagnetic, infrared, or semi-conductive system, apparatus, or device, or any combination thereof. More specific examples (a non-exhaustive list) of the readable storage medium include an electrical connection having one or more wires, a portable disk, a hard disk drive, a random-access memory (RAM), a read-only memory (ROM), an erasable programmable read-only memory (EPROM) (or a flash memory), an optical fiber, a compact disc read-only memory (CD-ROM), an optical storage device, a magnetic storage device, or any appropriate combination thereof.

The program product according to the embodiments of the present disclosure may use a portable compact disc read-only memory (CD-ROM), includes a computer program, and may be run on the electronic device. However, the program product of the present disclosure is not limited thereto. In this specification, the readable storage medium may be any tangible medium that includes or stores a program. The program may be used by or in combination with a command execution system, apparatus, or device.

The readable signal medium may include a data signal propagated in a baseband or as a part of a carrier, in which the readable computer program is carried. The propagated data signal may be in various forms, including but not limited to an electromagnetic signal, an optical signal, or any appropriate combination thereof. The readable signal medium may alternatively be any readable medium other than the readable storage medium, and the readable medium may send, propagate, or transmit a program used by or in combination with an instruction execution system, apparatus, or device.

The computer program included in the readable medium may be transmitted using any appropriate medium, including but not limited to a wireless medium, a wired medium, an optical cable, a radio frequency (RF), and the like, or any appropriate combination thereof.

The computer program for performing the operations in the present disclosure may be compiled by using one or more programming languages or any combination thereof. The programming languages include object-oriented programming languages such as Java and C++, and further include conventional procedural programming languages such as a "C" language or similar programming languages. The computer program may be completely executed on a user electronic device, partially executed on a user electronic device, executed as an independent software package, partially executed on a user electronic device and partially executed on a remote electronic device, or completely executed on a remote electronic device or server. In a case involving the remote electronic device, the remote electronic device may be connected to the user electronic device through any type of network including a local area network (LAN) or a wide area network (WAN), or may be connected to an external electronic device (for example, connected through the Internet using an Internet service provider).

Although several units or subunits of the apparatus are mentioned in the foregoing detailed descriptions, such division is merely exemplary and not mandatory. Actually, according to the embodiments of the present disclosure, the features and functions of two or more units described above may be specifically implemented in one unit. On the contrary, the features and functions of one unit described above may be further divided and specifically implemented by a plurality of units.

In addition, although the operations of the method in the present disclosure are described in a specific order in the accompanying drawings, this does not require or imply that these operations are bound to be performed in the specific order, or all operations shown are bound to be performed to achieve the expected result. Additionally or alternatively, some operations may be omitted, a plurality of operations may be combined into one operation for execution, and/or one operation may be decomposed into a plurality of operations for execution.

Persons skilled in the art can understand that the embodiments of the present disclosure may be provided as a method, a system, or a computer program product. Therefore, the present disclosure may use a form of hardware-only embodiments, software-only embodiments, or embodiments combining software and hardware. In addition, the present disclosure may use a form of a computer program product implemented on one or more computer-usable storage media (including but not limited to a disk memory, a CD-ROM, an optical memory, and the like) including computer-usable computer programs.

The present disclosure is described with reference to the flowcharts and/or block diagrams of the method, the device (system), and the computer program product according to the embodiments of the present disclosure. Computer program instructions may be used to implement each procedure and/or block in the flowcharts and/or block diagrams and a combination of procedures and/or blocks in the flowcharts and/or block diagrams. These computer program instructions may be provided to a general-purpose computer, a dedicated computer, an embedded processor, or a processor of another programmable data processing device to generate a machine, so that an apparatus configured to implement functions specified in one or more procedures in the flowcharts and/or one or more blocks in the block diagrams is generated by using instructions executed by the computer or the processor of the another programmable data processing device.

The respective operations in various embodiments may be combined in any manner. In all the embodiments, detailed description of all individual features present in one embodiment may each be used to explain each of the same individual features in another embodiment when there is no conflict.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Although a part of embodiments of the present disclosure have been described, persons skilled in the art can make changes and modifications to these embodiments once they learn a basic inventive concept. Therefore, the following claims are intended to be construed as to cover the described embodiments and all changes and modifications falling within the scope of the present disclosure.

**Claims**

1. An elevation information processing method, **characterized by** the method comprising:

   sampling lane data of a road in a target region to obtain a plurality of sampling points;
   determining, from a plurality of point cloud recognition results each obtained by recognizing a point cloud of the target region, a plurality of elevation values for a respective sampling point of the plurality of sampling points, as candidate elevation values of the respective sampling point, wherein the candidate elevation values of the respective sampling point form a candidate elevation value set of the respective sampling point;
   fitting the candidate elevation values of the plurality of sampling points to obtain a fitting result, and determining one or more target sampling points in the plurality of sampling points based on the fitting result; and
   for the candidate elevation value set of a respective target sampling point in the one or more target sampling points, determining a confidence of each candidate elevation value in the candidate elevation value set of the respective target sampling point, and determining an effective elevation value of the respective target sampling point based on the confidence of each candidate elevation value.

2. The method according to claim 1, **characterized in that** the determining a confidence of each candidate elevation value in the candidate elevation value set of the respective target sampling point, and determining an effective elevation value of the respective target sampling point based on the confidence of each candidate elevation value comprises:

determining the confidence of each candidate elevation value in the candidate elevation value set of the target sampling point based on reference map data and the plurality of point cloud recognition results; and
performing weighted fusion on each candidate elevation value based on the confidence of each candidate elevation value, to obtain the effective elevation value of the target sampling point.

3. The method according to claim 1 or 2, **characterized in that** the method further comprises:

determining, in response to that a quantity of target sampling points on a lane in the target region in the one or more target sampling points is less than a preset quantity threshold, a first target interpolation point on the lane; and
performing linear interpolation on the first target interpolation point based on effective elevation values of target sampling points on two sides of the first target interpolation point in the target sampling points on the lane, to obtain a first interpolated elevation value as an effective elevation value of the first target interpolation point.

4. The method according to any one of claims 1 to 3, **characterized in that**

the fitting the elevation values of the plurality of sampling points to obtain a fitting result, and determining one or more target sampling points in the plurality of sampling points based on the fitting result comprises: performing plane fitting on the plurality of sampling points based on the candidate elevation values of each of the plurality of sampling points, to obtain a fitted plane of the target region; and
using a sampling point on the fitted plane in the plurality of sampling points as a target sampling point in response to that an angle between the fitted plane and a standard normal vector is not less than a first preset angle threshold, the standard normal vector being a normal vector perpendicular to a horizontal ground.

5. The method according to claim 4, **characterized in that** the method further comprises:

converting longitude and latitude information of the respective sampling point in the plurality of point cloud recognition results into a linear reference distance in response to that the angle between the fitted plane and the standard normal vector is less than the first preset angle threshold, the linear reference distance indicating a distance between the respective sampling point and a starting point of a lane line to which the respective sampling point belongs, and the lane line being a segment of lane line in the target region;
performing line fitting on the plurality of sampling points based on the linear reference distances of the plurality of sampling points, to obtain a fitted straight line result of the target region; and
using a sampling point that is in the plurality of sampling points and that is on a target fitted straight line in the fitted straight line result as a target sampling point, the target fitted straight line being a fitted straight line whose angle with the standard normal vector is not less than a second preset angle threshold.

6. The method according to claim 5, **characterized in that** the method further comprises:

determining, for a non-target fitted straight line in the fitted straight line result, a second target interpolation point on the non-target fitted straight line;
determining target sampling points on target fitted straight lines adjacent to the non-target fitted straight line on two sides of the second target interpolation point along a longitudinal direction of the road in the target region; and
performing linear interpolation on the second target interpolation point based on effective elevation values of the target sampling points on the two sides of the second target interpolation point, to obtain a second interpolated elevation value as an effective elevation value of the second target interpolation point.

7. The method according to any one of claims 1 to 6, **characterized in that** the method further comprises:

determining a target point having an effective elevation value, the target point comprising at least one of a target sampling point, a first target interpolation point, or a second target interpolation point; and
optimizing the effective elevation value of the target point based on a topological relationship between roads in the target region, to obtain a target elevation value of the target point, comprising:

using the roads in the target region as a plurality of nodes in a road network graph;

determining at least one elevation category of a respective node of the plurality of nodes by clustering target sampling points on a road corresponding to the respective node, the at least one elevation category representing an elevation value of the corresponding road;

determining a sum of confidences of candidate elevation values of a target sampling point that belongs to an elevation category in the at least one elevation category and that is on the corresponding road, and using the sum of the confidences as a feature evaluation value of the elevation category;

selecting a target node from the plurality of nodes based on the feature evaluation value of each node; and propagating the elevation category of the target node, as a first target elevation category, from the target node to surroundings of the target node along a topological relationship between the plurality of nodes in the road network graph, and determining the propagated elevation category as a second target elevation category of another node in the road network graph ; and

comparing a target elevation category of a node associated with the target point with the effective elevation value of the target point, and obtaining the target elevation value of the target point based on a comparison result.

8. The method according to claim 7, **characterized in that** a manner of selecting the target node from the plurality of nodes based on the feature evaluation value of each node comprises at least one of:

using a node having only one feature evaluation value in the plurality of nodes as the target node; or using a node whose ratio of one feature evaluation value to another feature evaluation value is greater than a preset ratio threshold in the plurality of nodes as the target node.

9. The method according to claim 7 or 8, **characterized in that** the at least one elevation category of the respective node is obtained by:

clustering the candidate elevation values of the one or more target sampling points based on the candidate elevation value set of each target sampling point, to obtain at least one cluster, a difference between elevation values of cluster centers of different clusters in the at least one cluster being greater than a preset elevation threshold; and

determining an elevation value of a cluster center corresponding to each target sampling point associated with each node, and using the determined elevation value as the elevation value represented by the elevation category corresponding to each node.

10. The method according to any one of claims 7 to 9, **characterized in that** the obtaining the target elevation value of the target point based on a comparison result comprises:

using the effective elevation value of the target point as the target elevation value of the target point in response to that the comparison result is within a preset difference range; and

using an elevation value represented by the target elevation category of each node associated with the target point as the target elevation value of the target point in response to that the comparison result is beyond the preset difference range.

11. The method according to any one of claims 1 to 10, **characterized in that** the determining a confidence of each candidate elevation value in the candidate elevation value set of the target sampling point comprises:

determining, according to a point cloud recognition result associated with a candidate elevation value, a difference weight of the candidate elevation value based on a difference between a segment of point cloud lane line formed by the target sampling point and a next adjacent target sampling point and a segment of map lane line formed by corresponding points in the reference map data;

determining an acquisition time decay coefficient of the candidate elevation value based on acquisition time of the point cloud recognition result associated with the candidate elevation value;

determining, based on a recognized category of the target sampling point in the point cloud recognition result associated with the candidate elevation value, a preset category weight reduction coefficient corresponding to the recognized category; and

determining the confidence of the candidate elevation value based on the difference weight, the acquisition time decay coefficient, and the preset category weight reduction coefficient.

12. The method according to claim 11, **characterized in that** the difference weight comprises at least one of a distance weight or an angle weight; and
an operation of determining the difference weight of the candidate elevation value comprises at least one of:

determining the distance weight of the candidate elevation value based on a lateral distance between the segment of point cloud lane line and the segment of map lane line; or
determining the angle weight of the candidate elevation value based on a longitudinal angle between the segment of point cloud lane line and the segment of map lane line.

13. The method according to claim 12, **characterized in that** the difference weight comprises the distance weight and the angle weight, and the determining the confidence of the candidate elevation value based on the difference weight, the acquisition time decay coefficient, and the preset category weight reduction coefficient comprises:

determining a target parameter, the target parameter being a sum of a product of the distance weight and a first preset model parameter and a product of the angle weight and a second preset model parameter; and
using a product of the acquisition time decay coefficient, the preset category weight reduction coefficient, and the target parameter as the confidence of the candidate elevation value.

14. The method according to claim 12, **characterized in that** the determining the distance weight of the candidate elevation value based on a lateral distance between the segment of point cloud lane line and the segment of map lane line comprises:

determining the distance weight of the candidate elevation value based on a ratio of a square of the lateral distance to a square of a third preset model parameter; and
the determining the angle weight of the candidate elevation value based on a longitudinal angle between the segment of point cloud lane line and the segment of map lane line comprises:
determining the angle weight of the candidate elevation value based on a ratio of a square of the longitudinal angle to a square of a fourth preset model parameter.

15. The method according to any one of claims 11 to 14, **characterized in that** the determining an acquisition time decay coefficient of the candidate elevation value based on acquisition time of the point cloud recognition result associated with the candidate elevation value comprises:
determining the acquisition time decay coefficient based on a difference between the acquisition time of the point cloud recognition result associated with the candidate elevation value and maximum acquisition time, the maximum acquisition time being a maximum value in acquisition time of the plurality of point cloud recognition results.

16. The method according to any one of claims 1 to 15, **characterized in that** if the target region comprises an intersection, the method further comprises:

aggregating roads and lane lines at the intersection into a target part to be fitted based on a topological relationship;
performing sampling point expansion on the target part based on the plurality of point cloud recognition results;
performing fitting based on effective elevation values of intersection edge points in the target part and effective elevation values of the expanded sampling points, to obtain an intersection plane of the intersection; and
predicting an inlier at the intersection, and smoothing an intersection edge on the intersection plane based on a prediction result, the inlier being at least one of a road point or a lane line point at the intersection.

17. An elevation information processing apparatus, **characterized by** comprising:

a sampling unit, configured to sample lane data of a road in a target region to obtain a plurality of sampling points;
a fitting unit, configured to: determine, from a plurality of point cloud recognition results each obtained by recognizing a point cloud of the target region, a plurality of elevation values for a respective sampling point of the plurality of sampling points, as candidate elevation values of the respective sampling point, wherein the candidate elevation values of the respective sampling point form a candidate elevation value set of the respective sampling point; and fit the candidate elevation values of the plurality of sampling points to obtain a fitting result, and determine one or more target sampling points in the plurality of sampling points based on the fitting result; and

a fusion unit, configured to, for the candidate elevation value set of a respective target sampling point in the one or more target sampling points, determine a confidence of each candidate elevation value in the candidate elevation value set of the respective target sampling point, and determine an effective elevation value of the respective target sampling point based on the confidence of each candidate elevation value.

18. An electronic device, comprising a processor and a memory, the memory having a computer program stored therein, and the computer program, when executed by the processor, enabling the processor to perform the operations of the method according to any one of claims 1 to 16.

19. A computer-readable storage medium, comprising a computer program that, when run on an electronic device, is configured for enabling the electronic device to perform the operations of the method according to any one of claims 1 to 16.

FIG. 1

FIG. 2

Sample lane data of a road in a target region to obtain a plurality of sampling points — S31

Determine, from a plurality of point cloud recognition results obtained by recognizing a plurality of point clouds of the target region, a plurality of elevation values for each sampling point of the plurality of sampling points, as candidate elevation values of each sampling point, in which the candidate elevation values of each sampling point form a candidate elevation value set of each sampling point — S32

Fit candidate elevation values of the plurality of sampling points to obtain a fitting result, and determine one or more target sampling points in the plurality of sampling points based on the fitting result — S33

For a candidate elevation value set of each target sampling point in the one or more target sampling points, determine a confidence of each candidate elevation value in the candidate elevation value set of each target sampling point, and determining an effective elevation value of each target sampling point based on the confidence of each candidate elevation value — S34

Optimize the effective elevation value of each target sampling point based on a topological relationship between roads in the target region, to obtain a target elevation value of each target sampling point — S35

FIG. 3

Lane line
recognition
result

FIG. 4

FIG. 5

Resampling and
spatial analysis

RANSAC plane
fitting

Fitted
plane

FIG. 6

Vector B

Plane A

α

z

x   y

FIG. 7

Determine a difference weight of a candidate elevation value based on a difference between a segment of point cloud lane line formed by a target sampling point and a next adjacent target sampling point and a segment of map lane line formed by corresponding points in reference map data in a point cloud recognition result associated with the candidate elevation value, the difference weight including a distance weight and an angle weight — S81

S811: Determine the distance weight of the candidate elevation value based on a lateral distance between the segment of point cloud lane line and the segment of map lane line

S812: Determine the angle weight of the candidate elevation value based on a longitudinal angle between the segment of point cloud lane line and the segment of map lane line

Determine an acquisition time decay coefficient of the candidate elevation value based on acquisition time of a point cloud corresponding to the point cloud recognition result — S82

Determine, based on a recognized category of the target sampling point in the point cloud recognition result associated with the candidate elevation value, a preset category weight reduction coefficient corresponding to the recognized category — S83

Determine, based on the difference weight, the acquisition time decay coefficient, and the preset category weight reduction coefficient, a confidence corresponding to the candidate elevation value — S84

S841: Determine a sum of a product of the distance weight and a first preset model parameter and a product of the angle weight and a second preset model parameter, and denote the sum of the products as a target parameter

S842: Use a product of the acquisition time decay coefficient, the preset category weight reduction coefficient, and the target parameter as the confidence of the candidate elevation value

FIG. 8

Fitted plane

Interpolation
completion

FIG. 9

Use roads in a target region as a plurality of nodes in a road network graph; obtain at least one elevation category of each node by clustering a target sampling point on a road corresponding to each of the plurality of nodes, the at least one elevation category representing an elevation value of the corresponding road; and determine a sum of confidences of candidate elevation values of a target sampling point that belongs to an elevation category in the at least one elevation category and that is on the corresponding road, and use the sum of the confidences as a feature evaluation value of the corresponding elevation category — S101

Select a target node from the plurality of nodes based on the feature evaluation value of each node — S102

Propagate a target elevation category of the target node, as a first target elevation category, from the target node to surroundings of the target node along a topological relationship between the plurality of nodes in the road network graph, and determine the propagated elevation category as a second target elevation category of another node in the road network graph — S103

Compare a target elevation category of a node associated with a target point with an effective elevation value of the target point, and obtain a target elevation value of the target point based on a comparison result — S104

FIG. 10

Actual road network

L1    L2    L3

Road network graph

L1    L2    L3

FIG. 11

Candidate set

$Z_{31}$

$Z_{21}$

$Z_{11}$ $Z_{22}$ $Z_{32}$

$Z_{12}$ $Z_{23}$ $Z_{33}$

Candidate graph

FIG. 12

Graph
propagation
optimization

Candidate set
$Z_{21}$ $Z_{31}$
$Z_{11}$ $Z_{22}$ $Z_{32}$
$Z_{12}$ $Z_{23}$ $Z_{33}$

Candidate graph

Road surface
smoothing and
corrected elevation
generation

FIG. 13

| Aggregate roads and lane lines at an intersection into a target part to be fitted based on a topological relationship | S141 |

| Perform sampling point expansion on the target part based on each point cloud recognition result | S142 |

| Perform fitting based on effective elevation values of intersection edge points in the target part and effective elevation values of the expanded sampling points, to obtain an intersection plane corresponding to the intersection | S143 |

| Predict an inlier at the intersection, and smooth an intersection edge on the intersection plane based on a prediction result, the inlier being at least one of a road point or a lane line point at the intersection | S144 |

FIG. 14

FIG. 15

Elevation information processing
apparatus 1600

Sampling unit 1601

Fitting unit 1602

Fusion unit 1603

Optimization unit 1604

First interpolation unit
1605

Second interpolation unit
1606

Weight calculation unit
1607

Intersection processing unit
1608

FIG. 16

1703
Communication module

1702
Processor

Bus 1704

1701
Memory

FIG. 17

FIG. 18

## INTERNATIONAL SEARCH REPORT

| International application No. |
| --- |
| **PCT/CN2024/117933** |

**A. CLASSIFICATION OF SUBJECT MATTER**

G06V20/64(2022.01)i

According to International Patent Classification (IPC) or to both national classification and IPC

**B. FIELDS SEARCHED**

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

CNTXT, ENTXTC: 采集, 采样, 采样点, 车道, 道路, 地图, 点云, 高程, 可信, 可信度, 拟合, 信, 有效, 置信, 置信度, samp+, map, road, area, cloud, effective, elevation

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116958959 A (TENCENT TECHNOLOGY (SHENZHEN) CO., LTD.) 27 October 2023 (2023-10-27) description, paragraph [0005] to paragraph [0028] | 1-19 |
| Y | CN 114440902 A (BEIJING SANKUAI ONLINE TECHNOLOGY CO., LTD.) 06 May 2022 (2022-05-06) description, paragraph [0005] to paragraph [0053] | 1, 17-19 |
| Y | CN 115376086 A (SHENZHEN DEEPROUTE.AI CO., LTD.) 22 November 2022 (2022-11-22) description, paragraph [0003] to paragraph [0028] | 1, 17-19 |
| A | CN 104463924 A (NANJING NORMAL UNIVERSITY) 25 March 2015 (2015-03-25) entire document | 1-19 |
| A | CN 116184357 A (ZHEJIANG LAB) 30 May 2023 (2023-05-30) entire document | 1-19 |
| A | CN 116518960 A (TENCENT TECHNOLOGY (SHENZHEN) CO., LTD.) 01 August 2023 (2023-08-01) entire document | 1-19 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 October 2024** | **04 November 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/117933** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2021403001 A1 (LYFT INC.) 30 December 2021 (2021-12-30)<br>entire document | 1-19 |

**INTERNATIONAL SEARCH REPORT**
Information on patent family members

International application No.

**PCT/CN2024/117933**

| Patent document cited in search report | | | Publication date (day/month/year) | Patent family member(s) | | | Publication date (day/month/year) |
|---|---|---|---|---|---|---|---|
| CN | 116958959 | A | 27 October 2023 | HK | 40098498 | A0 | 05 April 2024 |
| CN | 114440902 | A | 06 May 2022 | None | | | |
| CN | 115376086 | A | 22 November 2022 | None | | | |
| CN | 104463924 | A | 25 March 2015 | None | | | |
| CN | 116184357 | A | 30 May 2023 | None | | | |
| CN | 116518960 | A | 01 August 2023 | None | | | |
| US | 2021403001 | A1 | 30 December 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311212439